(19) Europäisches Patentamt
European Patent Office
Office européen des brevets

(11) **EP 4 488 927 B1**

(12) **EUROPEAN PATENT SPECIFICATION**

(45) Date of publication and mention
of the grant of the patent:
**22.04.2026 Bulletin 2026/17**

(21) Application number: **24186934.6**

(22) Date of filing: **05.07.2024**

(51) International Patent Classification (IPC):
**G06T 3/4053** (2024.01)

(52) Cooperative Patent Classification (CPC):
**G06T 3/4053**

(54) **METHOD AND APPARATUS WITH SUPER RESOLUTION**

VERFAHREN UND VORRICHTUNG MIT SUPERAUFLÖSUNG

PROCÉDÉ ET APPAREIL À SUPER RÉSOLUTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.07.2023 KR 20230088014**

(43) Date of publication of application:
**08.01.2025 Bulletin 2025/02**

(73) Proprietor: **Samsung Electronics Co., Ltd
Suwon-si, Gyeonggi-do 16677 (KR)**

(72) Inventors:
• **JO, Younghyun**
  **16678 Suwon-si (KR)**
• **KI, Sehwan**
  **16678 Suwon-si (KR)**
• **KIM, Jung Soo**
  **16678 Suwon-si (KR)**
• **YOO, Dusic**
  **16678 Suwon-si (KR)**
• **LEE, Hyong Euk**
  **16678 Suwon-si (KR)**
• **CHOI, Seungwon**
  **16678 Suwon-si (KR)**
• **CHOI, Jongseong**
  **16678 Suwon-si (KR)**

(74) Representative: **Arnold & Siedsma
Bezuidenhoutseweg 57
2594 AC The Hague (NL)**

(56) References cited:
**EP-B1- 3 341 911**

• **GUANGHAO YIN ET AL: "Online Video Streaming
Super-Resolution with Adaptive Look-Up Table
Fusion", ARXIV.ORG, CORNELL UNIVERSITY
LIBRARY, 201 OLIN LIBRARY CORNELL
UNIVERSITY ITHACA, NY 14853, 1 March 2023
(2023-03-01), XP091455771**
• **TOUTOUNCHI FARZAD ET AL: "An efficient
video super-resolution approach based on
sparse representation", 2017 IEEE 19TH
INTERNATIONAL WORKSHOP ON MULTIMEDIA
SIGNAL PROCESSING (MMSP), IEEE, 16 October
2017 (2017-10-16), pages 1 - 6, XP033271549,
DOI: 10.1109/MMSP.2017.8122217**
• **"Computer Vision: Algorithms and Applications
2nd Edition", 30 September 2021, article
SZELISKI RICHARD ET AL: "Pixel transforms",
pages: 112 - 112, XP093219635**

**Description**

TECHNICAL FIELD

The following examples relate to a method and apparatus with super resolution.

BACKGROUND

An image super-resolution technique may be a technique for acquiring or generating a high-resolution (HR) image from a single low-resolution (LR) image. The image super-resolution technique may include not only increasing the quality of an LR image to HR, but also a zoom technique for largely zooming in on a small object in an image. Super-resolution techniques (e.g., Nearest, Bilinear, and Bicubic Interpolation) may use interpolation and various deep learning-based super-resolution techniques, and techniques for lightening a deep learning model may include quantization, pruning, low rank approximation, knowledge distillation, and compact network design to process super resolution of an image in real time in a mobile environment like a smart phone. Known from the art is EP3341911B1 (GOOGLE LLC [US]) 19 February 2020 (2020-02-19).

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general embodiments, a processor-implemented method with super resolution comprises: determining a direction type of an input image based on a gradient of the input image; acquiring a first intermediate image that is a super-resolution image corresponding to the input image based on a residual look-up table (LUT) corresponding to a kernel set mapped to the determined direction type; determining a LUT strength map of the input image based on the gradient of the input image and a preset tuning parameter; and generating an output image that is a super-resolution image of the input image based on the LUT strength map and the first intermediate image.

The acquiring of the first intermediate image may comprise: determining a receptive field corresponding to a reference pixel in the input image based on a kernel included in the kernel set; updating values of pixels in the receptive field with values obtained by subtracting a value of the reference pixel from the values of the pixels in the receptive field; and obtaining values stored in a residual LUT corresponding to the kernel with respect to a combination of the updated values of the pixels other than the reference pixel in the receptive field to acquire the first intermediate image.

The generating of the output image may comprise: acquiring a second intermediate image based on the LUT strength map and the first intermediate image; and generating the output image based on a baseline image acquired by applying interpolation for super resolution to the input image and the second intermediate image.

The LUT strength map of the input image may comprise a LUT strength value of each pixel in the input image, determined based on a product of a gradient of each pixel in the input image and the tuning parameter.

A LUT strength value of a first pixel included in the input image: may be determined to be a predetermined maximum value in response to a product of a magnitude of a gradient of the first pixel and the tuning parameter being greater than the predetermined maximum value, may be determined to be a predetermined minimum value in response to the product of the magnitude of the gradient of the first pixel and the tuning parameter being less than the predetermined minimum value, and may be determined to be the multiplication of the magnitude of the gradient of the first pixel and the tuning parameter in response to the product of the magnitude of the gradient of the first pixel and the tuning parameter being less than or equal to the maximum value and greater than or equal to the minimum value.

The kernel set may include a plurality of kernels, and the acquiring of the first intermediate image may comprise acquiring the first intermediate image based on a weighted sum of super-resolution operation results respectively corresponding to the kernels based on weights determined respectively for the kernels.

The acquiring of the first intermediate image may comprise updating the first intermediate image with an image acquired by overlapping patches corresponding to different regions of the first intermediate image, each of the patches of the first intermediate image may be a set of pixels corresponding to super-resolution results of each pixel in the input image, and a pixel value of a region where the patches are overlapped in the updated first intermediate image may be determined to be an average of pixel values of the overlapped patches.

The determining of the LUT strength map of the input image may comprise determining a LUT strength value corresponding to a pixel detected as a corner in the input image based on a gradient of the pixel detected as the corner in the input image and the tuning parameter, and the generating of the output image may comprise generating the output image based on the LUT strength value corresponding to the pixel detected as the corner in the input image and the first intermediate image, in response to a first pixel in the first intermediate image corresponding to the pixel detected as the corner in the input image.

The method may comprise setting the output image as the input image and repeating the determining of the direction type of the input image, the acquiring of the first intermediate image, the determining of the LUT strength map, and the generating of the output image.

In one or more general aspects, a processor-implemented method with super resolution comprises: determining a direction type of an input image based on a gradient of the input image; obtaining super-resolution operation results respectively corresponding to kernels included in a kernel set mapped to the determined direction type of the input image based on residual look-up tables (LUTs) respectively corresponding to the kernels; and generating an output image that is a super-resolution image of the input image based on a weighted sum of super-resolution operation results respectively corresponding to the kernels by weights determined respectively for the kernels, wherein the residual LUTs comprise super-resolution operation results of a combination of pixel values, the number of which is equal to the size of a corresponding kernel minus 1.

The generating of the output image may comprise: acquiring a first intermediate image that is a super-resolution image corresponding to the input image based on the weighted sum of the super-resolution operation results respectively corresponding to the kernels based on the weights determined respectively for the kernels; and generating the output image based on a baseline image acquired by applying interpolation for super resolution to the input image and the first intermediate image.

The obtaining of the super-resolution operation results may comprise: determining a receptive field corresponding to a reference pixel in the input image based on a kernel included in the kernel set; updating values of pixels in the receptive field with values obtained by subtracting a value of the reference pixel from the values of the pixels in the receptive field; and obtaining values stored in a residual LUT corresponding to the kernel with respect to a combination of the updated values of the pixels other than the reference pixel in the receptive field to obtain the super-resolution operation results.

A first weight determined for a first kernel among the kernels may be determined based on a relative positional relationship between a reference pixel and another pixel in a receptive field indicated by the first kernel.

The generating of the output image may comprise updating a super-resolution operation result corresponding to a first kernel among the kernels by overlapping patches corresponding to different regions of the super-resolution operation result corresponding to the first kernel, each of the patches of the super-resolution operation result corresponding to the first kernel may be a set of super-resolution results of each pixel in the input image stored in a residual LUT corresponding to the first kernel, and a pixel value of a region where the patches are overlapped in the updated super-resolution operation result corresponding to the first kernel may be determined to be an average of pixel values of the overlapped patches.

The generating of the output image may comprise: determining the weighted sum of the super-resolution operation results respectively corresponding to the kernels, for a first pixel detected as a corner in the input image; and determining a simple sum of the super-resolution operation results respectively corresponding to the kernels, for a second pixel not detected as a corner in the input image.

The method may comprise setting the output image as the input image and repeating the determining of the direction type of the input image, the obtaining of the super-resolution operation results respectively corresponding to the kernels, and the generating of the output image.

In one or more general aspects, a non-transitory computer-readable storage medium stores instructions that, when executed by a processor, configure the processor to perform any one, any combination, or all of operations and/or methods described herein.

In one or more general aspects, an apparatus for super-resolution image processing comprises: one or more processor configured to: determine a direction type of an input image based on a gradient of the input image; acquire a first intermediate image that is a super-resolution image corresponding to the input image based on a residual look-up table (LUT) corresponding to a kernel set mapped to the determined direction type; determine a LUT strength map of the input image based on the gradient of the input image and a preset tuning parameter; and generate an output image that is a super-resolution image of the input image based on the LUT strength map and the first intermediate image.

The kernel set may include a plurality of kernels, and, for the acquiring of the first intermediate image, the one or more processors may be configured to acquire the first intermediate image based on a weighted sum of super-resolution operation results respectively corresponding to the kernels based on weights determined respectively for the kernels.

In one or more general aspects, an apparatus for super-resolution image processing comprises: one or more processors configured to: determine a direction type of an input image based on a gradient of the input image; obtain super-resolution operation results respectively corresponding to kernels included in a kernel set mapped to the determined direction type of the input image based on residual look-up tables (LUTs) respectively corresponding to the kernels; and generate an output image that is a super-resolution image of the input image based on a weighted sum of super-resolution operation results respectively corresponding to the kernels by weights determined respectively for the kernels, wherein the residual LUTs comprise super-resolution operation results of a combination of pixel values, the number of which is equal to the size of a corresponding kernel minus 1.

Other features and aspects will be apparent from the following detailed description, the drawings, and the claims.

BRIEF DESCRIPTION OF THE FIGURES

FIG. 1 illustrates an example of a method for super resolution.
FIG. 2 illustrates examples of kernel sets mapped to direction types.
FIG. 3 illustrates an example of a residual look-up table (LUT) process.
FIG. 4 illustrates an example of a framework of a method for super resolution.
FIG. 5 illustrates an example of a framework of a method for super resolution.
FIG. 6 illustrates an example of a method for super resolution.
FIG. 7 illustrates an example of determining weights.
FIG. 8 illustrates an example of a framework of a method for super resolution.
FIG. 9 illustrates an example of a framework of a method for super resolution.
FIG. 10 illustrates an example of a method for super resolution based on an average value of overlapped regions.
FIG. 11 illustrates an example of a framework of a method for super resolution including an overlapped region average calculation process.
FIG. 12 illustrates an example of a framework of a method for super resolution including an overlapped region average calculation process.
FIG. 13 illustrates an example of a method for super resolution repeatedly performed.
FIGS. 14A to 14C illustrate examples of methods for super resolution for controlling artifacts.
FIGS. 15A to 15C illustrate examples of methods for super resolution for corner case processing.
FIG. 16 illustrates an example of a configuration of an apparatus.

Throughout the figures and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Although terms such as "first", "second", and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "connected to," "coupled to," or "joined to" another component or element, it may be directly (e.g., in contact with the other component or element) "connected to," "coupled to," or "joined to" the other component or element, or there may reasonably be one or more other components or elements intervening therebetween. When a component or element is described as "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

Hereinafter, examples will be described in detail with reference to the accompanying drawings. When describing the examples with reference to the accompanying drawings, like reference numerals refer to like elements and a repeated description related thereto will be omitted.

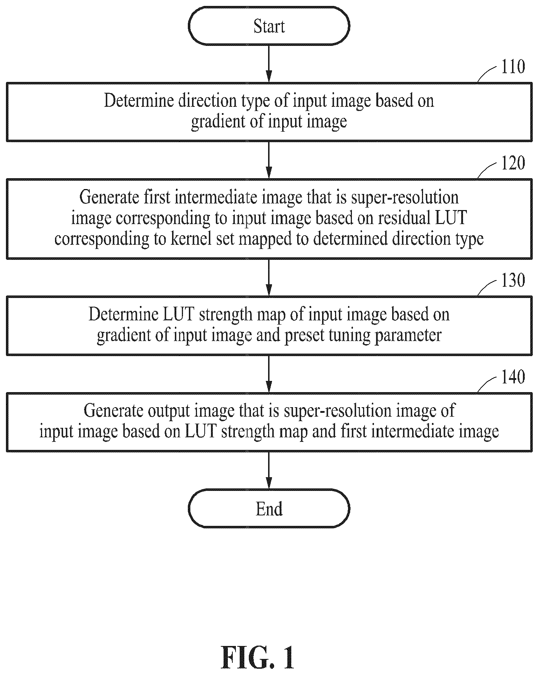

FIG. 1 illustrates an example of a method for super resolution. Operations 110 through 140 of FIG. 1 may be performed in the shown order and manner. However, the order of one or more of the operations may change and/or one or more of the operations may be performed in parallel or simultaneously without departing from the scope of the shown examples.

Referring to FIG. 1, a method for super resolution comprises operation 110 of determining a direction type of an input image based on a gradient of the input image.

The input image according to an example may be a low-resolution (LR) image and may correspond to an image that is a subject of super resolution. For example, the input image may include various images such as RAW data obtained from a complementary metal-oxide-semiconductor (CMOS) image sensor (CIS) or an image preprocessed (e.g., processed using white balance (WB), demosaicing, etc.) by an image signal processor (ISP).

According to an example, the input image may include an image corresponding to a single frame or a video including a plurality of frames. As an example, when the input image is a video including a plurality of frames, the method for super resolution including operations 110 to 140 may be performed for each frame. Hereinafter, an image corresponding to a single frame will be described as an example.

According to an example, a gradient of an image may be data indicating a variation in pixel value between adjacent pixels in the image. For example, when the brightness difference between the background and an object included in an image is significant, a pixel value may have a great variation at the boundary of the object, and thus, the gradient at the boundary of the object in the image may be a greater value than those of the other portions in the image.

According to an example, the gradient of the image may be obtained using various edge detection methods such as Canny, Sobel, and Prewitt. As an example, the gradient of the image may be obtained as a vector for a derivative with respect to the x-axis and the derivative with respect to the y-axis of the image.

Operation 110 according to an example may include an operation of obtaining a derivative component for each axis of the input image by applying a mask for the derivative with respect to each axis to the input image. For example, the mask for the derivative may include at least one of a Sobel mask, a Scharr mask, a Prewitt mask, or a Roberts mask. For example, the axes of the image may include the x-axis which is a horizontal axis and the y-axis which is a vertical axis of a two-dimensional image. The derivative component for each axis may be obtained by performing a derivative operation on each axis by applying the mask for the derivative to each of the x-axis and the y-axis of the input image.

For example, the derivative component $G_x$ with respect to the x-axis and the derivative component $G_y$ with respect to the y-axis of an image A may be obtained by performing an operation using a Sobel mask on the image, as expressed by Equation 1 below, for example.

Equation 1:

$$\mathbf{G}_x = \begin{bmatrix} +1 & 0 & -1 \\ +2 & 0 & -2 \\ +1 & 0 & -1 \end{bmatrix} * \mathbf{A} \quad \text{and} \quad \mathbf{G}_y = \begin{bmatrix} +1 & +2 & +1 \\ 0 & 0 & 0 \\ -1 & -2 & -1 \end{bmatrix} * \mathbf{A}$$

In Equation 1, the operation using the Sobel mask for the image A may be a convolution operation between a pixel value of the image A and the Sobel mask.

The direction type of the input image is preferably determined based on the gradient of the input image. The direction type of the input image may be determined for each pixel in the input image. The direction type of an image may be a type classified according to the direction in which pixel values of the image change, and may include a predetermined number of direction types. For example, the direction type may include a horizontal type, a vertical type, a slash type, and/or a back slash type.

Operation 110 according to an example may include an operation of determining the direction type of the input image to be one of the predetermined direction types based on the angle of the gradient of the input image obtained from the derivative component for each axis.

For example, the angle $\theta$ of the gradient may be obtained from the derivative components $G_x$ and $G_y$ for the respective axes, as expressed by Equation 2 below, for example.

Equation 2:

$$\theta = \tan^{-1}\frac{G_y}{G_x}$$

The range of the value of the angle $\theta$ of the gradient computed according to Equation 2 may correspond to [-$\pi$/2, $\pi$/2]. For example, the angle $\theta$ of the gradient computed according to Equation 2 may have a value within the range of -90 degrees or more and 90 degrees or less.

According to an example, the number of direction types may vary according to settings. For example, the number of direction types may be set to a value greater than or equal to "1". When the number of direction types is set to a greater value, the size of a look-up table (LUT) may increase because the number of kernels corresponding to the direction types increases. When the number of direction types is set to a greater value, the method and apparatus of one or more preferred embodiments may further improve the super-resolution performance.

As an example, as shown in Table 1 below, the direction type of the input image may be determined to be one of the four predetermined direction types according to the range of the angle $\theta$ of the gradient computed for the input image.

Table 1:

| Horizontal | Slash (Diagonal) | Back slash (Diagonal) | Vertical |
|---|---|---|---|
| -22.5 $\leq \theta$ < 22.5 | 22.5 $\leq \theta$ < 67.5 | -67.5 $\leq \theta$ < -22.5 | else |

For example, when the angle $\theta$ of the gradient falls within the range of -22.5 degrees or more and less than 22.5 degrees, the direction type of the input image may be determined to be a horizontal type. For example, when the angle $\theta$ of the gradient falls within the range of 22.5 degrees or more and less than 67.5 degrees, the direction type of the input image may be determined to be a slash type. For example, when the angle $\theta$ of the gradient falls within the range of -67.5 degrees or more and less than -22.5 degrees, the direction type of the input image may be determined to be a back slash type. For example, when the angle $\theta$ of the gradient does not fall within any of the range of 22.5 degrees or more and less than 67.5 degrees, the range of -67.5 degrees or more and less than - 22.5 degrees, and the range of -67.5 degrees or more and less than -22.5 degrees, the direction type of the input image may be determined to be a vertical type.

As an example, as shown in Table 2 below, the direction type of the input image may be determined to be one of the two predetermined direction types according to the range of the angle $\theta$ of the gradient computed for the input image.

Table 2:

| Horizontal | Vertical |
|---|---|
| -45 $\leq \theta$ < 45 | else |

For example, when the angle $\theta$ of the gradient falls within the range of -45 degrees or more and less than 45 degrees, the direction type of the input image may be determined to be a horizontal type. For example, when the angle $\theta$ of the gradient does not fall within the range of -45 degrees or more and less than 45 degrees, the direction type of the input image may be determined to be a vertical type.

According to an example, the number of direction types may vary according to settings. For example, the number of direction types may be set to a value greater than or equal to "1". When the number of direction types is set to a greater value, the method and apparatus of one or more preferred embodiments may further improve the super-resolution performance. As an example, the number of direction types may be a value determined independently of an upscaling factor. As an example, the number of direction types may be a value determined independently of a kernel size.

According to an example, a kernel set may be mapped to each direction type. A kernel set corresponding to the input image may be determined according to the direction type of the input image. The kernel set may correspond to a set of at least one kernel. A kernel may correspond to data indicating a receptive field of a super-resolution model that the method implements to perform super resolution on an LR image.

The super-resolution model according to an example may correspond to a model for outputting a super-resolution image corresponding to an LR image input thereinto. For example, the super-resolution model may include a neural network trained to output a super-resolution image obtained by upscaling an input image by a preset factor. The super-resolution model may output pixels in the super-resolution image corresponding to each pixel in the input image of the model. As an example, when the upscaling factor of super resolution is r, the super-resolution model may output pixels in $r^2$ super-resolution images corresponding to one pixel in the input image.

According to an example, the upscaling factor of the super-resolution model may be determined differently for the width and height of an image. For example, when the upscaling factor for the width of an image is $r_1$ and the upscaling factor for the height is $r_2$, the super-resolution model may output pixels in $r_1 \times r_2$ super-resolution images corresponding to one pixel in an input image. $r_1$ and $r_2$ may have the same value or different values.

According to an example, the super-resolution model may operate to output pixels in the super-resolution image corresponding to a predetermined pixel (hereinafter, a reference pixel) in the input image, based on a receptive field corresponding to the reference pixel. The receptive field corresponding to the reference pixel may include the reference pixel and pixel(s) that are positioned around or near the reference pixel and referenced to output the pixels in the super-resolution image corresponding to the reference pixel. The super-resolution model may operate to output pixels in the super-resolution image corresponding to the reference pixel by referring to the reference pixel and the pixel(s) positioned around the reference pixel in the input image. For example, the super-resolution model may determine the values of the pixels in the super-resolution image with respect to the reference pixel based on an operation on the value of the reference pixel and the pixel(s) positioned around the reference pixel in the image.

According to an example, the super-resolution model may determine the pixels to be referenced to determine a super-resolution operation result of the reference pixel, based on a kernel set mapped to a direction type corresponding to the reference pixel in the input image. The pixels indicated by a kernel included in the kernel set may be referenced to determine the values of the pixels in the super-resolution image corresponding to the reference pixel. When a plurality of kernels is included in the kernel set, the values of the pixels in the super-resolution image corresponding to the reference pixel may be determined based on a simple sum or weighted sum of results obtained for the respective kernels.

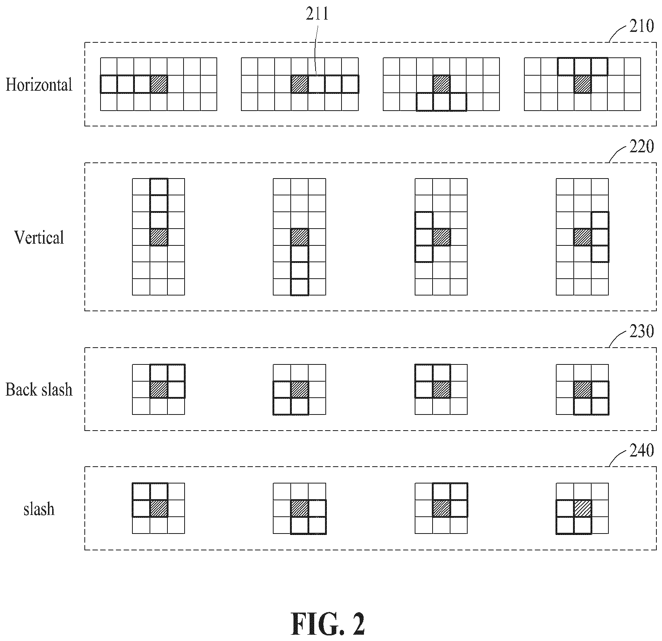

For example, FIG. 2 illustrates examples of kernel sets mapped to direction types. Referring to FIG. 2, a first kernel set 210 mapped to a horizontal type, a second kernel set 220 mapped to a vertical type, a third kernel set 230 mapped to a back slash type, and a fourth kernel set 240 mapped to a slash type are shown. A rectangular matrix in FIG. 2 may correspond to a partial region of an input image, and one cell of the rectangular matrix may correspond to a pixel unit of the input image. A bold-line figure (e.g., 211) on a rectangular matrix in FIG. 2 may correspond to a kernel. Each of the kernel sets 210, 220, 230, and 240 may include four kernels.

For example, the kernel 211 may correspond to a kernel having a size of "4" including four pixels. A shaded pixel in the kernel 211 may be a reference pixel, and pixel§ in a super-resolution image corresponding to the reference pixel may be determined based on the values of the pixels included in the kernel 211.

According to an example, a plurality of different kernels included in the same kernel set may have different kernel characteristics such as size and/or shape. Each kernel set may include a different combination of kernels. For example, the kernels included in the first kernel set 210 and the kernels included in the second kernel set 220 may be different in shape. FIG. 2 shows an example in which the kernels included in each kernel set have the same size "f""4" pixels. However, unlike the example of FIG. 2, each kernel set may include kernels of a different size. For example, the size of kernels included in a kernel set mapped to a first direction type may be $2 \times 2$ pixels, and the size of kernels included in a kernel set mapped to a second direction type may be $3 \times 3$ pixels.

The method for super resolution preferably comprises operation 120 of acquiring a first intermediate image that is a super-resolution image corresponding to the input image based on a residual LUT corresponding to a kernel set mapped to the determined direction type.

A LUT according to an example may correspond to a data structure in which super-resolution operation results of a super-resolution model are stored. As described above, a super-resolution operation result corresponding to a predetermined pixel may be determined based on a pixel value within a receptive field according to a kernel. The LUT may store super-resolution operation results using a super-resolution model for a combination of all pixels corresponding to the receptive field. As described above, the receptive field may be determined by the kernel. A super-resolution operation result may include pixel values of a super-resolution image mapped to each of pixel value combinations corresponding to the size of the kernel.

A LUT according to an example may correspond to each kernel. A kernel set may include one or more kernels, and each kernel included in the kernel set may be mapped to a LUT. For example, referring to FIG. 2, sixteen LUTs may store super-resolution operation results respectively corresponding to sixteen kernels included in the kernel sets 210, 220, 230, and 240. As an example, a first LUT corresponding to a first kernel may include a super-resolution operation result corresponding to the first kernel, and a second LUT corresponding to a second kernel may include a super-resolution operation result corresponding to the second kernel. The super-resolution operation result corresponding to the first kernel and the super-resolution operation result corresponding to the second kernel for the same combination of pixel values may be different from each other.

A LUT according to an example may include a residual LUT. The residual LUT may include a super-resolution operation result of a combination of pixel value(s), the number of which equals the size of a corresponding kernel minus 1. The residual LUT may store a super-resolution operation result for a combination of (kernel size - 1) pixel value(s) excluding the reference pixel from the size of the kernel. By reducing the number of input pixels excluding the reference pixel from the size of the kernel, the method and apparatus of one or more preferred embodiments may advantageously reduce the LUT memory size by a factor of the number of sampling points.

Operation 120 of acquiring the first intermediate image preferably comprises an operation of determining a receptive field corresponding to a reference pixel in the input image based on a kernel included in the kernel set, an operation of updating values of pixels in the receptive field with values obtained by subtracting a value of the reference pixel from the values of the pixels in the receptive field, and an operation of obtaining values stored in a residual LUT corresponding to the kernel with respect to a combination of the updated values of the pixels other than the reference pixel in the receptive field.

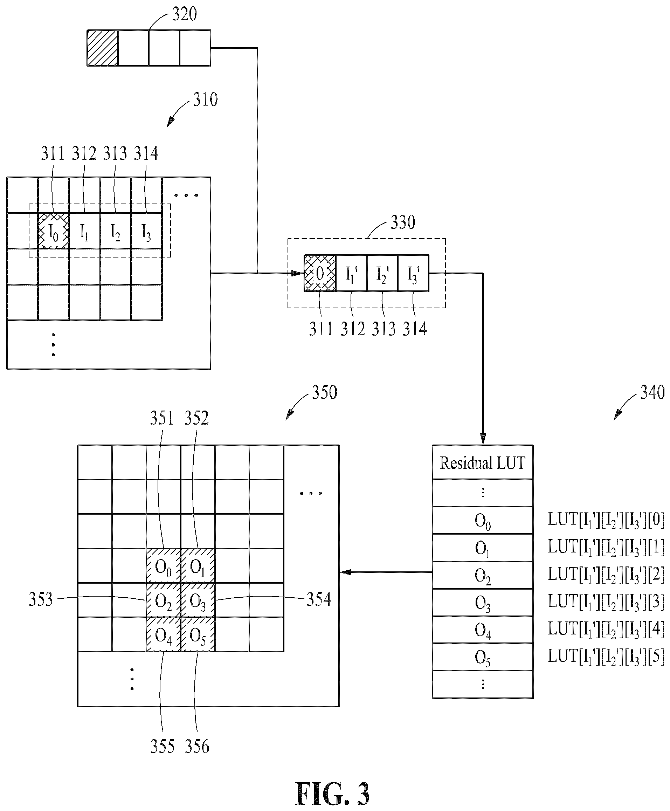

For example, FIG. 3 illustrates an example of a residual look-up table (LUT) process. Referring to FIG. 3, the values of pixels 311, 312, 313, and 314 included in a receptive field of an input image 310 according to a kernel 320 may be updated based on the value of the reference pixel 311. The values of the pixels 311, 312, 313, and 314 included in the receptive field may be updated to values obtained by subtracting the value of the reference pixel 311 from the original values of the pixels 311, 312, 313, and 314. Referring to an updated receptive field 330, the updated value of the reference pixel 311 may be $I_0 - I_0 = 0$, the updated value of the pixel 312 may be $I_1 - I_0 = I_1'$, the updated value of the pixel 313 may be $I_2 - I_0 = I_2'$, and the updated value of the pixel 314 may be $I_3 - I_0 = I_3'$. A residual LUT 340 may include a super-resolution operation result corresponding to a combination of the three pixels 312, 313, and 314 excluding the reference pixel 311 from the size (e.g., 4) of the kernel. For example, when one pixel has an integer value greater than or equal to "0" and less than or equal to "255", the residual LUT 340 corresponding to the kernel 320 having a size of "4" may include super-resolution operation results corresponding to $256^3$ combinations, which are all possible combinations of the three pixel values.

According to an example, a residual LUT may store $r_1 \times r_2$ super-resolution operation results for each combination of pixel values having a size corresponding to a kernel, according to an upscaling factor $r_1$ for the width and an upscaling factor $r_2$ for the height. For example, referring to FIG. 3, when the upscaling factor for the width is "2" and the upscaling factor for the height is "3", the residual LUT 340 may store six super-resolution operation results $O_0, O_1, O_2, O_3, O_4,$ and $O_5$ corresponding to a combination of $I_1', I_2',$ and $I_3'$, which is a combination of three pixels smaller than the size of the kernel 320 by "1".

As an example, six values $LUT[I_1'][I_2'][I_3'][0] = O_0, LUT[I_1'][I_2'][I_3'][1] = O_1, LUT[I_1'][I_2'][I_3'][2] = O_2, LUT[I_1'][I_2'][I_3'][3] = O_3, LUT[I_1'][I_2'][I_3'][4] = O_4,$ and $LUT[I_1'][I_2'][I_3'][5] = O_5$ stored in a LUT with respect to the combination of $I_1', I_2',$ and $I_3'$, which is a combination of the updated values of the remaining pixels 312, 313, and 314 excluding the reference pixel 311 included in the updated receptive field 330 may be respectively determined to be the values of six pixels 351, 352, 353, 354, 355, and 356 in a super-resolution image 350 corresponding to the reference pixel 311. The values of the six pixels 351, 352, 353, 354, 355, and 356 in the super-resolution image 350 may correspond to super-resolution results of the reference pixel 311. The reference pixel 311 may be determined to be one of the pixels included in the input image 310. The super-resolution image 350 may correspond to an image including super-resolution operation results obtained from the residual LUT 340 by setting each of all the pixels included in the input image 310 as a reference pixel.

According to an example, $r_1 \times r_2$ pixel values of a super-resolution image corresponding to a reference pixel in an input image may be determined based on the locations where $r_1 \times r_2$ super-resolution operation results are stored in a residual LUT. For example, referring to FIG. 3, with respect to $I_1', I_2',$ and $I_3'$, which is a combination of the updated values of the remaining pixels 312, 313, and 314 excluding the reference pixel 311, among the pixels 311, 312, 313, and 314 included in the receptive field of the reference pixel 311, the value $O_0$ stored at the position of $LUT[I_1'][I_2'][I_3'][0]$ of the residual LUT 340 may be determined to be the value of the pixel 351 corresponding to the location (0, 0) among the six pixels 351, 352, 353, 354, 355, and 356 in the super-resolution image 350 corresponding to the reference pixel 311, the value $O_1$ stored at the position of $LUT[I_1'][I_2'][I_3'][1]$ may be determined to be the value of the pixel 352 corresponding to the location (0, 1) among the six pixels 351, 352, 353, 354, 355, and 356 in the super-resolution image 350 corresponding to the reference pixel 311, the value $O_2$ stored at the position of $LUT[I_1'][I_2'][I_3'][2]$ may be determined to be the value of the pixel 353 corresponding to the location (1, 0) among the six pixels 351, 352, 353, 354, 355, and 356 in the super-resolution image 350 corresponding to the reference pixel 311, the value $O_3$ stored at the position of $LUT[I_1'][I_2'][I_3'][3]$ may be determined to be the value of the pixel 354 corresponding to the location (1, 1) among the six pixels 351, 352, 353, 354, 355, and 356 in the super-resolution image 350 corresponding to the reference pixel 311, the value $O_4$ stored at the position of $LUT[I_1'][I_2'][I_3'][4]$ may be determined to be the value of the pixel 355 corresponding to the location (2, 0) among the six pixels 351, 352, 353, 354, 355, and 356 in the super-resolution image 350 corresponding to the reference pixel 311, and the value $O_5$ stored at the position of $LUT[I_1'][I_2'][I_3'][5]$ may be determined to be the value of the pixel 356 corresponding to the location (2, 1) among the six pixels 351, 352, 353, 354, 355, and 356 in the super-resolution image 350 corresponding to the reference pixel 311.

According to an example, a LUT corresponding to a kernel may store a super-resolution operation result for a combination of pixel values separately in a LUT corresponding to the most significant bit (MSB) and a LUT corresponding to the least significant bit (LSB). For example, when one pixel has an integer value greater than or equal to "0" and less than or equal to "$2^n$" (where n is a natural number greater than or equal to "1"), the value of the pixel may be represented by n bits. The LUT corresponding to the MSB may store data corresponding to upper $n_1$ bits of n-bit pixel values, and the LUT corresponding to the LSB may store data corresponding to $n_2$ bits of the n-bit pixel values. Here, $n_1$ and $n_2$ may be determined to be natural numbers less than n that satisfies the condition of $n_1 + n_2 = n$. For example, in storing $r_1 \times r_2$ super-resolution operation results having pixel values represented by 8 bits with respect to each combination of four pixels having pixel values represented by 8 bits in the LUT, the LUT corresponding to the MSB may store the value corresponding to upper 4 bits of $r_1 \times r_2$ super-resolution operation results corresponding to a combination of upper 4 bits of the pixel values of the four pixels. The LUT corresponding to the LSB may store the value corresponding to lower 4 bits of $r_1 \times r_2$ super-resolution operation results corresponding to a combination of lower 4 bits of the pixel values of the four pixels. The final pixel value of a super-resolution image may be determined based on a combination of the result in the LUT corresponding to the MSB and the result in the LUT corresponding to the LSB. For example, when a predetermined pixel value of a super-resolution image obtained based on the LUT corresponding to the MSB is 0101 and the corresponding pixel value obtained based on the LUT corresponding to the LSB is 0001, the final value of the corresponding pixel may be determined to be 01010001 having 0101 as four upper bit values and 0001 as four lower bit values.

According to an example, the process of obtaining super-resolution operation results corresponding to each pixel in an input image from a residual LUT in which super-resolution operation results of a pixel value combination corresponding to a kernel of the input image are stored may be referred to as a residual LUT process. The kernel of the input image may include a kernel included in the kernel set mapped to the direction type determined in operation 110.

Preferably, the first intermediate image is acquired by performing the residual LUT process on the input image. The first intermediate image may correspond to an output result of the super-resolution model for the input image. By using the operation results stored in the LUT without performing an operation of the super-resolution model on an image to acquire the first intermediate image, the method and apparatus of one or more preferred embodiments may reduce the time and resources used for operations.

Preferably, when a plurality of kernels is included in the kernel set mapped to the direction type of the input image, the first intermediate image may be acquired based on a super-resolution operation result for each of the kernels. The super-resolution operation result for each of the kernels may be obtained from a residual LUT corresponding to each kernel. As an example, when a plurality of kernels is included in the kernel set, the value of a simple sum of the super-resolution operation results for the respective kernels may be determined to be the pixel value of the first intermediate image. As an example, when a plurality of kernels is included in the kernel set, the average value of the super-resolution operation results for the respective kernels may be determined to be the pixel value of the first intermediate image.

As an example, when a plurality of kernels is included in the kernel set, the value of a weighted sum of the super-resolution operation results for the respective kernels may be determined to be the pixel value of the first intermediate image. For example, operation 120 of acquiring the first intermediate image preferably comprises an operation of acquiring the first intermediate image based on a weighted sum of super-resolution operation results respectively corresponding to the kernels based on weights determined respectively for the kernels. An example of the operation of acquiring the first intermediate image based on the weighted sum of the super-resolution operation results for the respective kernels will be described in detail below.

Operation 120 of acquiring the first intermediate image preferably comprises an operation of updating the first intermediate image with an image acquired by overlapping patches corresponding to different regions of the first intermediate image. Each of the patches of the first intermediate image may be a set of pixels corresponding to super-resolution results of each pixel in the input image. The pixel value of a region where the patches are overlapped in the updated first intermediate image may be determined to be the average of the pixel values of the overlapped patches. An example of this will be described in detail below.

The method for super resolution preferably comprises operation 130 of determining a LUT strength map of the input image based on the gradient of the input image and a preset tuning parameter. As an example, the tuning parameter may be an adjustable variable value and may be predetermined and/or set by a user.

Preferably, the LUT strength map of the input image comprises a LUT strength value of each pixel in the input image. The LUT strength value of each pixel in the input image may be determined based on the product of the gradient of each pixel in the input image and the tuning parameter.

For example, the LUT strength map of the input image may be determined as expressed by Equation 3 below, for example.

Equation 3:

$$LUT\ strength\ map = Clip((|G_x| + |G_y|) \times \alpha, min, max)$$

In Equation 3, $G_x$ and $G_y$ denote derivative components with respect to the x-axis and y-axis of the input image, respectively, and may be obtained by Equation 1. $|G_x|+|G_y|$ may be the magnitude of the gradient and may be a value indicating the degree of difference or variation in pixel value.

According to Equation 3, a LUT strength value of a predetermined pixel (e.g., a first pixel) included in the input image may be determined to be a predetermined maximum value *max* when the product of the magnitude $|G_x|+|G_y|$ of the gradient of the first pixel and the tuning parameter $\alpha$ is greater than the maximum value *max,* may be determined to be a predetermined minimum value *min* when the product of the magnitude of the gradient $|G_x|+|G_y|$ of the first pixel and the tuning parameter $\alpha$ is less than the minimum value *min,* and may be determined to be the product of the magnitude $|G_x|+|G_y|$ of the gradient of the first pixel and the tuning parameter $\alpha$ when the product of the magnitude $|G_x|+|G_y|$ of the gradient of the first pixel and the tuning parameter $\alpha$ is less than or equal to the maximum value *max* and greater than or equal to the minimum value *min.* In Equation 3, in an example, the maximum value *max* and the minimum value *min* are predetermined values. For example, the maximum value *max* may be determined to be "1" and the minimum value *min* may be determined to be "0".

According to an example, the LUT strength map of the input image may be determined based on the value obtained by applying smoothing to the magnitude of the gradient and then multiplying the smoothed value by the tuning parameter. As an example, the LUT strength map may be determined as in Equation 4 below, for example.

Equation 4:

$$LUT\ strength\ map = Clip((|G_x| + |G_y|) * k * \alpha, min, max)$$

In Equation 4, k denotes a filter for smoothing and may correspond to a filter corresponding to the sizes of $G_x$ and $G_y$. For example, when the sizes of $G_x$ and $G_y$ are 3×3, k may correspond to a 3×3 filter, and the value of an element included in k may correspond to the reciprocal (e.g., 1/9) for the size of a mask (e.g., a Sobel mask) for obtaining the derivative component $G_x$ for the x-axis and the derivative component $G_y$ for the y-axis of the image. For example, the operation * may correspond to a convolution operation.

The LUT strength map may have more elements having the maximum value or a value close to the maximum value when the value of the tuning parameter increases. As an example, a pixel corresponding to an edge in an image may have a greater magnitude of a gradient than a pixel not corresponding to an edge. When the value of the tuning parameter is set to a value greater than "1", the LUT strength value of a pixel corresponding to an edge portion having a relatively large magnitude of a gradient may be the maximum value or a value close to the maximum value.

The method for super resolution preferably comprises operation 140 of acquiring (e.g., generating) an output image that is a super-resolution image of the input image based on the LUT strength map and the first intermediate image. As an example, the values of pixels corresponding to the first pixel in the output image may be determined based on the products of the LUT strength value of the predetermined pixel (e.g., the first pixel) in the input image included in the LUT strength map and the values of pixels corresponding to the first pixel in the first intermediate image. The values of the pixels corresponding to the first pixel in the output image may correspond to a super resolution result of the first pixel. As an example, the output image may be acquired based on pixel-wise multiplication between the LUT strength map and the first intermediate image. When the LUT strength map has a resolution corresponding to the resolution of the input image, which is a lower resolution than the first intermediate image, the LUT strength map upscaled to the resolution of the first intermediate image may be used. The upscaled LUT strength map may include the same LUT strength value with respect to the same pixel.

The degree of applying the first intermediate image to the output image may be determined for each pixel by the LUT strength map. According to the LUT strength map, since a pixel corresponding to an edge has a greater LUT strength value than a pixel not corresponding to an edge, the value of the first intermediate image may be applied more to the output image in a region corresponding to an edge than in a region not corresponding to an edge. By applying the value of the first intermediate image more to a region corresponding to an edge, the method and apparatus of one or more preferred embodiments may generate the output image with increased sharpness of the region corresponding to an edge. By applying the value of the first intermediate image less to a region not corresponding to an edge (e.g., a flat region) having a relatively small magnitude of a gradient, the method and apparatus of one or more preferred embodiments may generate the output image with reduced artifacts in the region not corresponding to an edge.

Operation 140 of acquiring the output image preferably comprises an operation of acquiring a second intermediate image based on the LUT strength map and the first intermediate image, and an operation of acquiring the output image based on a baseline image acquiring by applying interpolation for super resolution to the input image and the second intermediate image.

As an example, the second intermediate image may be acquired based on pixel-wise multiplication of the LUT strength map and the first intermediate image.

The baseline image may correspond to a super-resolution image of the input image acquired by interpolation for super resolution. The interpolation for super resolution may be a method of estimating a new pixel value included in a super-resolution image using a function derived from the positions and values of pixels in an input image, and may include, for example, linear interpolation, bilinear interpolation, nearest interpolation, bicubic interpolation, inverse distance weighted (IDW) interpolation, and/or kriging interpolation. As an example, the baseline image may correspond to a super-resolution image acquired by upscaling the input image by a preset factor.

According to an example, the output image may be acquired based on a pixel-wise sum of the pixel value of the baseline image and the second intermediate image. By adding the second intermediate image to the baseline image acquired by interpolation, the method and apparatus of one or more preferred embodiments may generate a super-resolution image with improved quality and reduced artifacts.

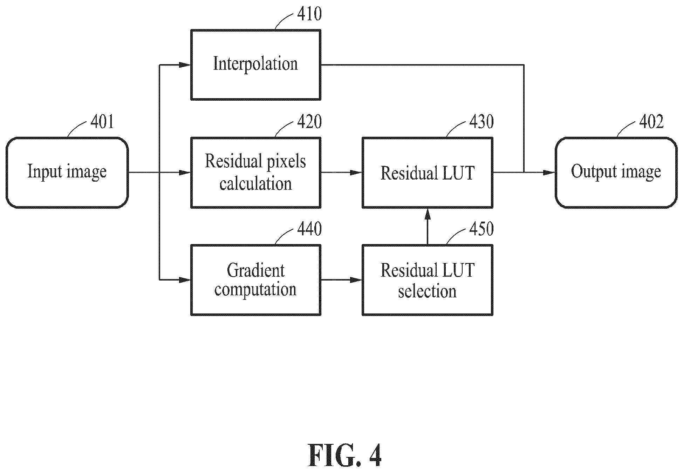

FIG. 4 illustrates an example of a framework of a method for super resolution.

Referring to FIG. 4, a method for super resolution preferably comprises an interpolation process 410 for acquiring a baseline image by applying interpolation for super resolution to an input image 401.

The method for super resolution according to an example may include a gradient computation process 440. The gradient computation process 440 may include an operation of computing the angle of the gradient of each pixel included in the input image 401. The angle of the gradient may be computed as in Equation 2. As an example, the gradient computation process 440 may include an operation of computing the magnitude of the gradient of the input image 401.

The method for super resolution according to an example may include a residual LUT selection process 450. The residual LUT selection process 450 may include an operation of selecting a residual LUT corresponding to a direction type corresponding to each pixel in the input image. The direction type corresponding to each pixel in the input image may be determined based on the gradient computed in the gradient computation process 440. As described above, the direction type may be mapped to a kernel set. In the residual LUT selection process 450, a residual LUT corresponding to each of the kernels of the kernel set mapped to the direction type may be selected.

The method for super resolution according to an example may include a residual pixels calculation process 420. The residual pixels calculation process 420 may include an operation of updating the values of pixels in a receptive field with the values obtained by subtracting the value of a reference pixel from the values of the pixels in the receptive field. As described above, the receptive field may be determined by a kernel included in the kernel set mapped to the direction type corresponding to the reference pixel.

The method for super resolution according to an example may include a residual LUT process 430. As described above, the residual LUT process 430 may include obtaining super-resolution operation results corresponding to each pixel in the input image from a residual LUT in which super-resolution operation results of a pixel value combination corresponding to a kernel of the input image are stored. The residual LUT for obtaining the super-resolution operation result may be the residual LUT selected by the residual LUT selection process 450. A combination of the remaining pixel values excluding the reference pixel in the receptive field updated by the residual pixels calculation process 420 may be obtained. A super-resolution operation result of the reference pixel stored in the residual LUT with respect to the combination of the remaining pixel values obtained by the residual LUT process 430 may be obtained.

When a plurality of kernels is included in the kernel set, the residual LUT process 430 according to an example may include an operation of calculating a simple sum or weighted sum of super-resolution results obtained from residual LUTs respectively corresponding to the kernels.

A super-resolution image acquired by the residual LUT process 430 may be referred to as a first intermediate image.

According to an example, the output image 402 may be acquired based on the first intermediate image acquired by the residual LUT process 430 and the baseline image acquired by the interpolation process 410. As an example, the output image 402 may be acquired by adding the baseline image and the first intermediate image pixel-wise.

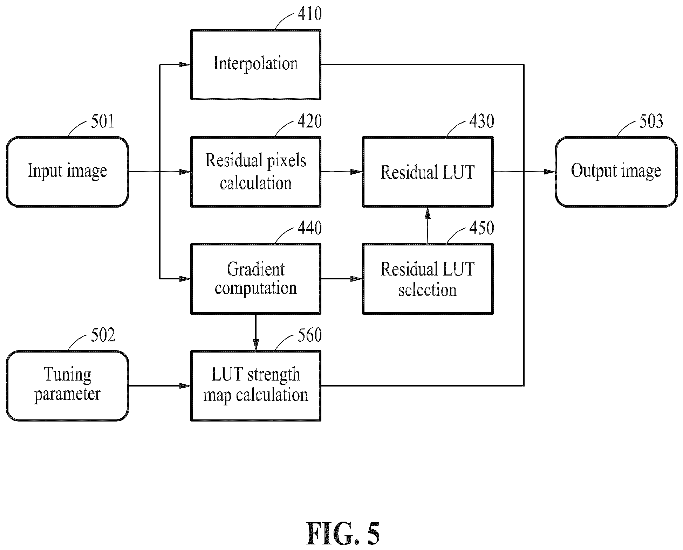

FIG. 5 illustrates an example of a framework of a method for super resolution.

Referring to FIG. 5, a method for super resolution may include a LUT strength map calculation process 560. The LUT strength map calculation process 560 may correspond to operation 130 described above with reference to FIG. 1. For example, the LUT strength map calculation process 560 may include an operation of determining a LUT strength map including a LUT strength value of each pixel in an input image 501 based on the gradient of the input image 501 and a preset tuning parameter 502. As an example, the tuning parameter 502 may be determined to be a value input by a user or a predetermined value.

According to an example, an output image 503 may be acquired based on the LUT strength map obtained by the LUT strength map calculation process 560, a first intermediate image acquired by the residual LUT process 430, and a baseline image acquired by the interpolation process 410.

As an example, the output image 503 may be acquired by multiplying an image generated by adding the baseline image and the first intermediate image pixel-wise by the LUT strength map. Multiplication of an image and a LUT strength map may be multiplication of the value of a pixel in the image and a LUT strength value corresponding to the pixel or pixel-wise multiplication of the image and a LUT map.

As an example, the output image 503 may be acquired by adding the baseline image to a second intermediate image generated by multiplying the first intermediate image by the LUT strength map. The sum of the second intermediate image and the baseline image may be the sum of the value of a pixel in the second intermediate image and the value of a pixel in the baseline image corresponding to the pixel or the pixel-wise sum of the second intermediate image and the baseline image.

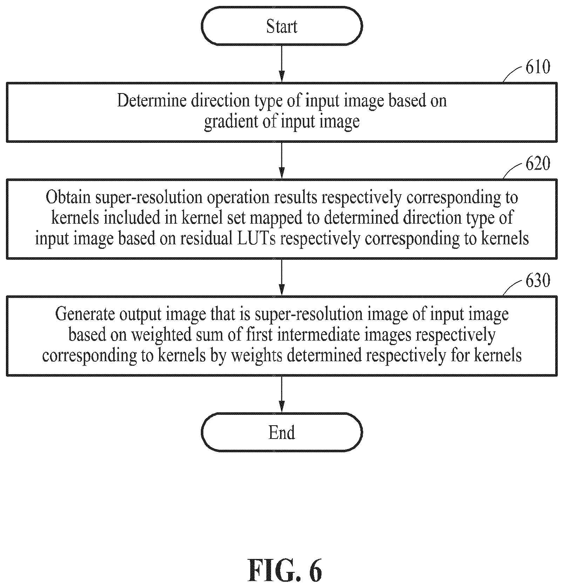

FIG. 6 illustrates an example of a method for super resolution. Operations 610 through 630 of FIG. 6 may be performed in the shown order and manner. However, the order of one or more of the operations may change and/or one or more of the operations may be performed in parallel or simultaneously without departing from the scope of the shown examples.

Referring to FIG. 6, a method for super resolution preferably comprises operation 610 of determining a direction type of an input image based on a gradient of the input image. Operation 610 may correspond to operation 110 of FIG. 1 described above.

The method for super resolution preferably comprises operation 620 of obtaining super-resolution operation results respectively corresponding to kernels included in a kernel set mapped to the determined direction type of the input image based on residual LUTs respectively corresponding to the kernels.

Preferably, operation 620 of obtaining the super-resolution operation results comprises an operation of determining a receptive field corresponding to a reference pixel in the input image based on a kernel included in the kernel set, an operation of updating values of pixels in the receptive field with values obtained by subtracting a value of the reference pixel from the values of the pixels in the receptive field, and an operation of obtaining values stored in a residual LUT corresponding to the kernel with respect to a combination of the updated values of the pixels other than the reference pixel in the receptive field.

The method for super resolution preferably comprises operation 630 of acquiring an output image that is a super-resolution image of the input image based on a weighted sum of first intermediate images respectively corresponding to the kernels by weights determined respectively for the kernels.

A weight according to an example may be determined with respect to each kernel. As an example, a first weight determined for a first kernel among the kernels included in the kernel set may be determined based on a relative positional relationship between a reference pixel and a pixel in a receptive field indicated by the first kernel. When a relative positional relationship between the reference pixel and the pixel in the receptive field indicated by the second kernel among the kernels is different from the positional relationship indicated by the first kernel, a second weight determined for the second kernel may be different from the first weight.

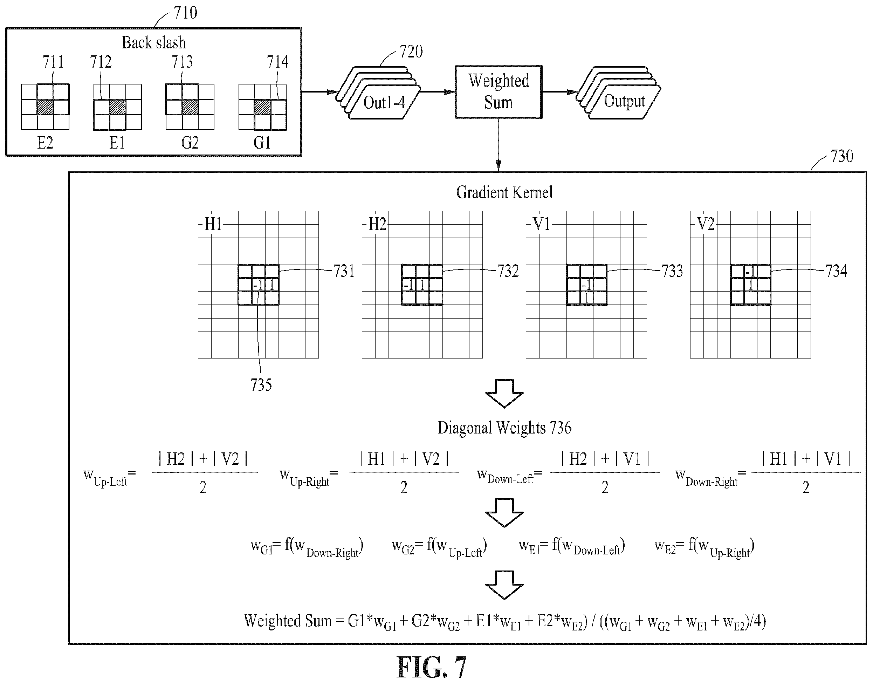

For example, FIG. 7 illustrates an example of determining weights. Referring to FIG. 7, when a kernel set 710 corresponding to a reference pixel in an input image is determined to be a kernel set mapped to a back slash type, super-resolution operation results 720 respectively corresponding to four kernels 711, 712, 713, and 714 included in the kernel set 710 may be obtained. The super-resolution operation results 720 may include a super-resolution operation result corresponding to the kernel E2 711, a super-resolution operation result corresponding to the kernel E1 712, a super-resolution operation result corresponding to the kernel G2 713, and a super-resolution operation result corresponding to the kernel G1 714. A super-resolution operation result corresponding to each kernel may be a super-resolution operation result of a reference pixel stored in a residual LUT of each kernel, and may correspond to a region of a super-resolution image corresponding to the reference pixel in an input image. As an example, when an upscaling factor is $3\times3$, the super-resolution operation result of the reference pixel may include nine pixel values.

Referring to a weight determination process 730 according to an example, a convolution operation between the input image and a first gradient kernel 731, a convolution operation between the input image and a second gradient kernel 732, a convolution operation between the input image and a third gradient kernel 733, and a convolution operation between the input image and a fourth gradient kernel 734 may be performed to determine weights respectively corresponding to the kernels 711, 712, 713, and 714 included in the kernel set 710. The convolution operations between the input image and the gradient kernels 731, 732, 733, and 734 may be performed based on a reference pixel 735 of the input image. The result of the convolution operation between the input image and the first gradient kernel 731 may be indicated as H1, the result of the convolution operation between the input image and the second gradient kernel 732 may be indicated as H2, the result of the convolution operation between the input image and the third gradient kernel 733 may be indicated as V1, and the result of the convolution operation between the input image and the fourth gradient kernel 734 may be indicated as V2.

According to an example, diagonal weights 736 including an up-left weight $w_{Up\text{-}Left}$, an up-right weight $w_{Up\text{-}Right}$, a

down-left weight $w_{Down-Left}$, and a down-right weight $w_{Down-Right}$ may be determined based on the results of the convolution operations between the input image and the gradient kernels 731, 732, 733, and 734.

As an example, the up-left weight $w_{Up-Left}$, the up-right weight $w_{Up-Right}$, the down-left weight $w_{Down-Left}$, and the down-right weight $w_{Down-Right}$ may be determined as respectively expressed by Equations 5 to 8 below, for example.

Equation 5:

$$w_{Up-Left} = \frac{|H2| + |V2|}{2}$$

Equation 6:

$$w_{Up-Right} = \frac{|H1| + |V2|}{2}$$

Equation 7:

$$w_{Down-Left} = \frac{|H2| + |V1|}{2}$$

Equation 8:

$$w_{Down-Right} = \frac{|H1| + |V1|}{2}$$

According to an example, the weights respectively corresponding to the four kernels 711, 712, 713, and 714 included in the kernel set 710 may be determined. The weights respectively corresponding to the kernels 711, 712, 713, and 714 may be determined based on the positional relationship between a reference pixel and the remaining pixel(s) in a receptive field. The positional relationship between the reference pixel and the remaining pixel(s) in the receptive field may be determined to be a direction (e.g., a right (rightward) direction, a left (leftward) direction, an up (upward) direction, or a down (downward) direction) in which the remaining pixel(s) are positioned relative to the reference pixel. Weights determined based on a positional relationship between a reference pixel and the remaining pixel(s) in a receptive field indicated by a kernel may be determined to be higher values when the value of a super-resolution operation result obtained from a residual LUT corresponding to the kernel decreases, that is, when the value differences between the reference pixel and the remaining pixel(s) in the kernel decrease.

As an example, since the remaining pixels in the receptive field are positioned in the down and right directions relative to the reference pixel in the kernel G1 714, the relative positional relationship between the reference pixel and another pixel in the receptive field indicated by the kernel G1 714 may correspond to the down-rightward direction. A weight $w_{G1}$ corresponding to the kernel G1 714 corresponding to the down-rightward direction may be determined based on the down-right weight $w_{Down-Right}$.

As an example, since the remaining pixels in the receptive field are positioned in the up and left directions relative to the reference pixel in the kernel G2 713, the relative positional relationship between the reference pixel and another pixel in the receptive field indicated by the kernel G2 713 may correspond to the up-leftward direction. A weight $w_{G2}$ corresponding to the kernel G2 713 corresponding to the up-leftward direction may be determined based on the up-left weight $w_{Up-Left}$.

As an example, since the remaining pixels in the receptive field are positioned in the down and left directions relative to the reference pixel in the kernel E1 712, the relative positional relationship between the reference pixel and another pixel in the receptive field indicated by the kernel E1 712 may correspond to the down-leftward direction. A weight $w_{E1}$ corresponding to the kernel E1 712 corresponding to the down-leftward direction may be determined based on the down-left weight $w_{Down-Left}$.

As an example, since the remaining pixels in the receptive field are positioned in the up and right directions relative to the reference pixel in the kernel E2 711, the relative positional relationship between the reference pixel and another pixel in the receptive field indicated by the kernel E2 711 may correspond to the up-rightward direction. A weight

$w_{E2}$ corresponding to the kernel E2 711 corresponding to the up-rightward direction may be determined based on the up-right weight $w_{Up\text{-}Right}$.

As an example, the weight $w_{G1}$ corresponding to the kernel G1 714, the weight $w_{G2}$ corresponding to the kernel G2 713, the weight $w_{E1}$ corresponding to the kernel E1 712, and the weight $w_{E2}$ corresponding to the kernel E2 711 may be determined based on the function f(x) as respectively expressed by Equations 9 to 12, below, for example. As an example, the function may be a function of f(x)=1/x. As an example, the function may be a function of f(x) = clip(-x+1, 0, 1).

Equation 9:

$$w_{G1} = f(w_{Down\text{-}Right})$$

Equation 10:

$$w_{G2} = f(w_{Up\text{-}Left})$$

Equation 11:

$$w_{E1} = f(w_{Down\text{-}Left})$$

Equation 12:

$$w_{E2} = f(w_{Up\text{-}Right})$$

According to an example, the weighted sum of the super-resolution operation results 720 based on the weights respectively corresponding to the four kernels 711, 712, 713, and 714 included in the kernel set 710 may be defined as expressed by Equation 13 below, for example.

Equation 13:

$$(G1^*w_{G1} + G2^*w_{G2} + E1^*w_{E1} + E2^*w_{E2}) / ((w_{G1}+w_{G2}+w_{E1}+w_{E2})/4)$$

Unlike the example of FIG. 7, when the direction type of the reference pixel in the input image is a slash type, the weights respectively for the kernels included in the fourth kernel set 240 shown in FIG. 2 may be determined. The fourth kernel set 240 has the same configuration of kernels as the kernel set 230 mapped to a back slash type. The weight for each of the kernels included in the fourth kernel set 240 may be determined based on one of the diagonal weights 736 including the up-left weight $w_{Up\text{-}Left}$, the up-right weight $w_{Up\text{-}Right}$, the down-left weight $w_{Down\text{-}Left}$, and the down-right weight $w_{Down\text{-}Right}$ shown in FIG. 7, according to the positional relationship between the reference pixel and the remaining pixel(s) in the receptive field indicated by each kernel. As an example, the weight for a kernel included in the fourth kernel set 240 may be determined to be the reciprocal of the up-left weight $w_{Up\text{-}Left}$, the up-right weight $w_{Up\text{-}Right}$, the down-left weight $w_{Down\text{-}Left}$, or the down-right weight $w_{Down\text{-}Right}$.

Unlike the example of FIG. 7, when the direction type of the reference pixel in the input image is a horizontal type, the weights respectively for the kernels included in the first kernel set 210 shown in FIG. 2 may be determined. The positional relationship between the reference pixel and the remaining pixel(s) in the receptive field indicated by each of the kernels included in the first kernel set 210 may correspond to one of the leftward, rightward, downward, and upward directions. When the positional relationship between the reference pixel and the remaining pixel(s) in the receptive field indicated by a kernel included in the first kernel set 210 is the leftward direction, $w_{Left}$ = |H2| may be determined, and the weight of the corresponding kernel may be determined based on $f(w_{Left})$. When the positional relationship between the reference pixel and the remaining pixel(s) in the receptive field indicated by a kernel included in the first kernel set 210 is the rightward direction, $w_{Right}$ = |H1| may be determined, and the weight of the corresponding kernel may be determined based on $f(w_{Right})$. When the positional relationship between the reference pixel and the remaining pixel(s) in the receptive field indicated by a kernel included in the first kernel set 210 is the downward direction, $w_{Down}$ = |V1| may be determined, and the weight of the corresponding kernel may be determined based on $f(w_{Down})$. When the positional relationship between the reference pixel and the remaining pixel(s) in the receptive field indicated by a kernel included in the first kernel set 210 is the upward direction, $w_{Up}$ = |V2| may be determined, and the weight of the corresponding kernel may be determined based on $f(w_{Up})$.

Unlike the example of FIG. 7, when the direction type of the reference pixel in the input image is a vertical type, the weights respectively for the kernels included in the second kernel set 220 shown in FIG. 2 may be determined. Similar to the first kernel set 210, the positional relationship between the reference pixel and the remaining pixel(s) in the receptive field indicated by each of the kernels included in the second kernel set 220 may correspond to one of the leftward, rightward, downward, and upward directions. The weight for each of the kernels included in the second kernel set 220 may be determined based on one of $w_{Left}$, $w_{Right}$, $w_{Down}$, and $w_{up}$, according to the positional relationship between the reference pixel and the remaining pixel(s) in the receptive field indicated by each kernel.

Operation 630 of acquiring the output image preferably comprises an operation of acquiring the first intermediate image that is a super-resolution image corresponding to the input image based on a weighted sum of super-resolution operation results respectively corresponding to the kernels based on weights determined respectively for the kernels, and an operation of acquiring the output image based on a baseline image acquiring by applying interpolation for super resolution to the input image and the first intermediate image.

Operation 630 of acquiring the output image according to an example may include an operation of updating a super-resolution operation result corresponding to a first kernel among the kernels by overlapping patches corresponding to different regions of the super-resolution operation result corresponding to the first kernel. Each of the patches of the super-resolution operation result corresponding to the first kernel may be a set of super-resolution results of each pixel in the input image stored in a residual LUT corresponding to the first kernel. The pixel value of a region where the patches are overlapped in the updated super-resolution operation result corresponding to the first kernel may be determined to be an average of the pixel values of the overlapped patches.

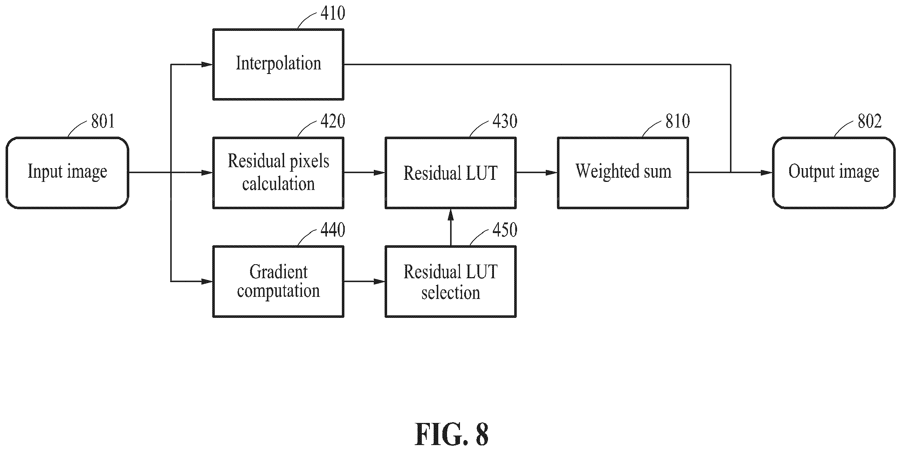

FIG. 8 illustrates an example of a framework of a method for super resolution.

Referring to FIG. 8, a method for super resolution may include a weighted sum process 810. As an example, the weighted sum process 810 may correspond to operation 630 described above with reference to FIG. 6. The weighted sum process 810 may include an operation of calculating a weighted sum of super-resolution operation results respectively corresponding to kernels of a kernel set corresponding to a reference pixel based on weights determined respectively for the kernels. A first intermediate image may be generated as a result of the weighted sum. As an example, the weights of the respective kernels for the weighted sum may be determined by the weight determination process 730 described above with reference to FIG. 7.

According to an example, an output image 802 may be acquired based on a first intermediate image acquired by the weighted sum process 810 and a baseline image acquired by the interpolation process 410. As an example, the output image 802 may be acquired by adding the baseline image and the first intermediate image pixel-wise.

The method and apparatus of one or more preferred embodiments may generate the output image 802 with reduced artifacts using the first intermediate image by applying weights to a plurality of super-resolution operation results obtained for a plurality of kernels.

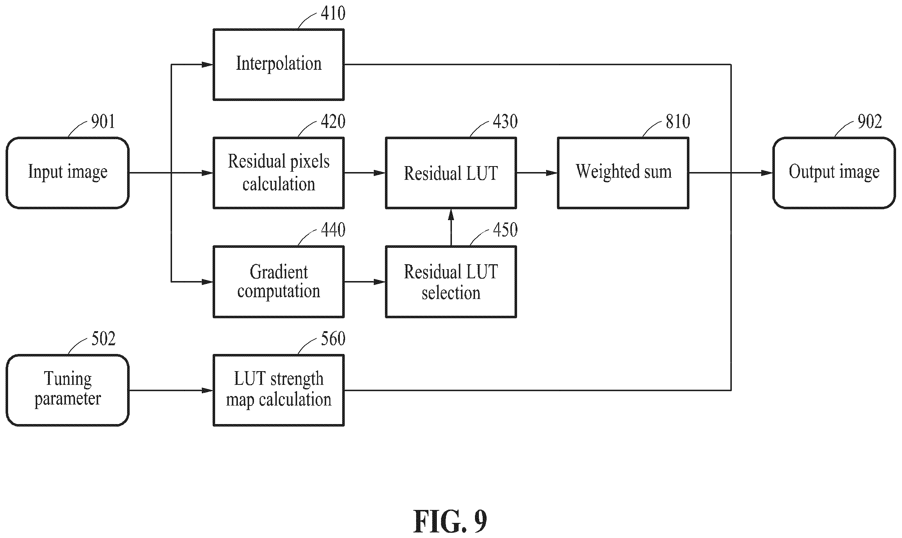

FIG. 9 illustrates an example of a framework of a method for super resolution.

Referring to FIG. 9, an output image 902 according to an example may be acquired based on a LUT strength map obtained by the LUT strength map calculation process 560, a first intermediate image acquired by the weighted sum process 810, and a baseline image acquired by the interpolation process 410.

As an example, the output image 902 may be acquired by multiplying an image generated by adding the baseline image and the first intermediate image pixel-wise by the LUT strength map. Multiplication of an image and a LUT strength map may be multiplication of the value of a pixel in the image and a LUT strength value corresponding to the pixel or pixel-wise multiplication of the image and a LUT map.

As an example, the output image 902 may be acquired by adding the baseline image to a second intermediate image generated by multiplying the first intermediate image by the LUT strength map. The sum of the second intermediate image and the baseline image may be the sum of the value of a pixel in the second intermediate image and the value of a pixel in the baseline image corresponding to the pixel or the pixel-wise sum of the second intermediate image and the baseline image.

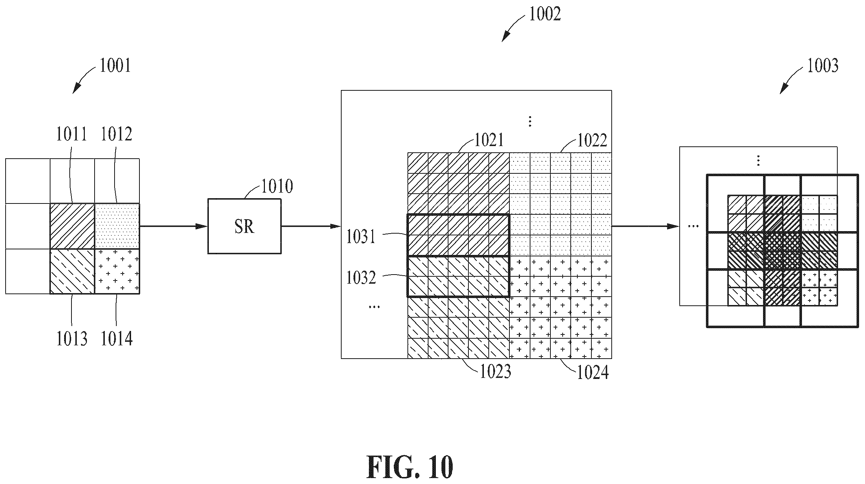

FIG. 10 illustrates an example of a method for super resolution based on an average value of overlapped regions.

Referring to FIG. 10, a method for super resolution based on an average value of overlapped regions according to an example may include an operation of acquiring an intermediate super-resolution image 1002 by performing a super-resolution process 1010 on an input image 1001 using an upscaling factor greater than a target resolution. The super-resolution process 1010 may include the residual LUT process described above or the method for super resolution described above with reference to FIGS. 1 to 9. The target resolution may correspond to the desired resolution of an output image to be finally obtained by performing super-resolution on the input image 1001. The intermediate super-resolution image 1002 acquired by the super-resolution process 1010 may correspond to an image of a resolution higher than the target resolution. For example, when the target resolution is $3\times3$, the resolution of the intermediate super-resolution image 1002 may be $5\times5$.

The method for super resolution based on the average value of overlapped regions according to an example may include an operation of acquiring a super-resolution image 1003 of the target resolution by overlapping patches 1021, 1022, 1023, and 1024 of the acquired intermediate super-resolution image 1002.

The patches 1021, 1022, 1023, and 1024 may be a set of super-resolution results of each pixel in the input image. As an example, the first patch 1021 may be a set of super-resolution results of a first pixel 1011 in the input image 1001, and may include 5×5 pixels obtained by super-resolution on the first pixel 1011. As an example, the second patch 1022 may be a set of super-resolution results of a second pixel 1012 in the input image 1001, and may include 5×5 pixels obtained by super-resolution on the second pixel 1012. As an example, the third patch 1023 may be a set of super-resolution results of a third pixel 1013 in the input image 1001, and may include 5×5 pixels obtained by super-resolution on the third pixel 1013. As an example, the fourth patch 1024 may be a set of super-resolution results of a fourth pixel 1014 in the input image 1001, and may include 5×5 pixels obtained by super-resolution on the fourth pixel 1014.

The super-resolution image 1003 may correspond to an image of the target resolution acquired by overlapping the patches 1021, 1022, 1023, and 1024 of the intermediate super-resolution image 1002. The super-resolution image 1003 may include super-resolution results corresponding to the pixels 1011, 1012, 1013, and 1014 in the input image 1001. As an example, the super-resolution image 1003 may include 3×3 pixels corresponding to each of the pixels 1011, 1012, 1013, and 1014 obtained by super-resolution on the input image 1001.

According to an example, the super-resolution image 1003 of a lower resolution than the intermediate super-resolution image 1002 may be acquired by overlapping the patches of the intermediate super-resolution image 1002. The pixel value of a region where the patches are overlapped may be determined to be the average of the pixel values of the overlapped patches. The pixel value of a region where partial regions of two or more patches are overlapped in the super-resolution image 1003 may be determined to be the average of the pixel values of the overlapped region of the overlapped patches. As an example, a partial region 1031 of the first patch 1021 corresponding to the first pixel 1011 and a partial region 1032 of the second patch 1022 corresponding to the second pixel 1012 adjacent to the first pixel 1011 may be overlapped to generate the super-resolution image 1003. The pixel value of a region where the partial region 1031 of the first patch 1021 and the partial region 1032 of the second patch 1022 are overlapped in the super-resolution image 1003 may be determined to be the average of the pixel value of the partial region 1031 of the first patch 1021 and the pixel value of the partial region 1032 of the second patch 1022.

Hereinafter, the operation of acquiring the super-resolution image 1003 by overlapping the patches of the intermediate super-resolution image 1002 may be referred to as an overlapped region average calculation process. The overlapped region average calculation process may be performed with respect to a super-resolution image acquired for an input image.

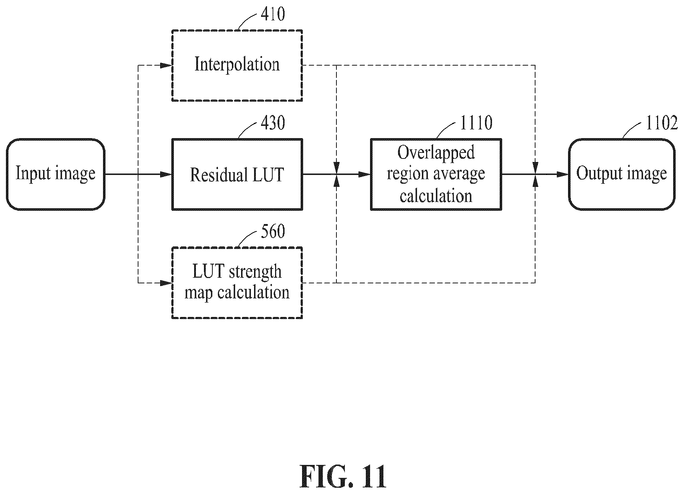

As an example, FIG. 11 illustrates an example of a framework of a method for super resolution including an overlapped region average calculation process. Referring to FIG. 11, an overlapped region average calculation process 1110 may be performed on a first intermediate image acquired by the residual LUT process 430. The first intermediate image may correspond to an image of a resolution higher than a target resolution. An image corresponding to the target resolution may be acquired by performing the overlapped region average calculation process 1110 on the first intermediate image. As described above, the first intermediate image may include an image generated by a sum or weighted sum of super-resolution results corresponding to a plurality of kernels.

As an example, the overlapped region average calculation process 1110 may be performed on an image generated based on the sum of the first intermediate image acquired by the residual LUT process 430 and a baseline image acquired by the interpolation process 410. The first intermediate image acquired by the residual LUT process 430 and the baseline image acquired by the interpolation process 410 may correspond to images of a resolution higher than the target resolution. An image corresponding to the target resolution may be acquired by performing the overlapped region average calculation process 1110 on the image generated based on the sum of the first intermediate image acquired by the residual LUT process 430 and the baseline image acquired by the interpolation process 410.

As an example, the overlapped region average calculation process 1110 may be performed on a second intermediate image generated based on the product of the first intermediate image acquired by the residual LUT process 430 and a LUT strength map obtained by the LUT strength map calculation process 560.

As an example, the overlapped region average calculation process 1110 may be performed on an image generated based on the sum of the second intermediate image and the baseline image acquired by the interpolation process 410.

As an example, an output image 1102 may correspond to an image acquired by the overlapped region average calculation process 1110. As an example, the output image 1102 may be acquired based on the image acquired by the overlapped region average calculation process 1110 and the baseline image acquired by the interpolation process 410. As an example, the output image 1102 may be acquired based on the image acquired by the overlapped region average calculation process 1110 and the LUT strength map obtained by the LUT strength map calculation process 560. As an example, the output image 1102 may be acquired based on the image acquired by the overlapped region average calculation process 1110, the baseline image acquired by the interpolation process 410, and the LUT strength map obtained by the LUT strength map calculation process 560.

Although not shown in FIG. 11, at least one of the residual pixels calculation process 420, the gradient computation process 440, the residual LUT selection process 450, and the LUT strength map calculation process 560 described above may be further performed.

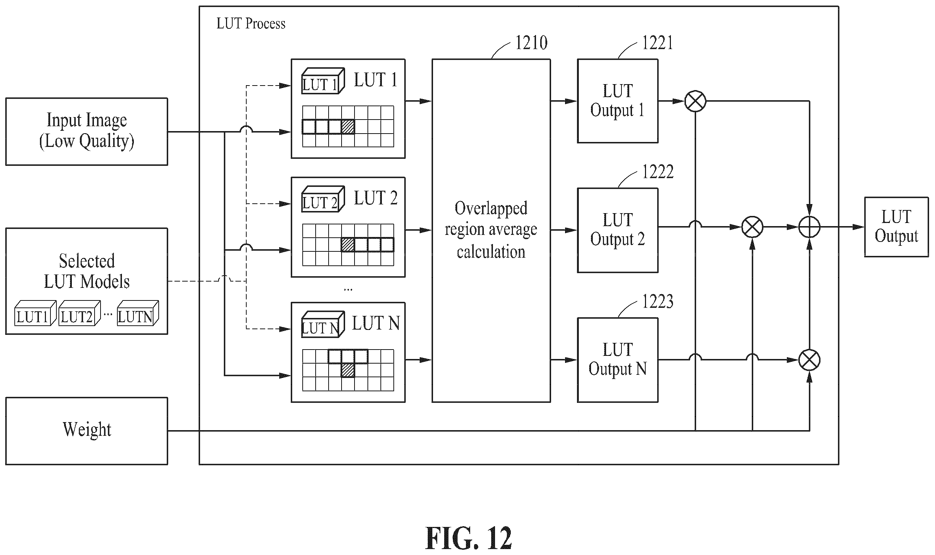

As an example, FIG. 12 illustrates an example of a framework of a method for super resolution including an overlapped region average calculation process. Referring to FIG. 12, an overlapped region average calculation process 1210 may be performed on a super-resolution operation result obtained from a residual LUT corresponding to each kernel included in a kernel set. The super-resolution operation result obtained from the residual LUT corresponding to each kernel may correspond to an image of a resolution higher than a target resolution. A first intermediate image of the target resolution may be acquired based on the sum or weighted sum of LUT outputs 1221, 1222, and 1223 obtained by performing the overlapped region average calculation process 1110 on the super-resolution operation result corresponding to each kernel.

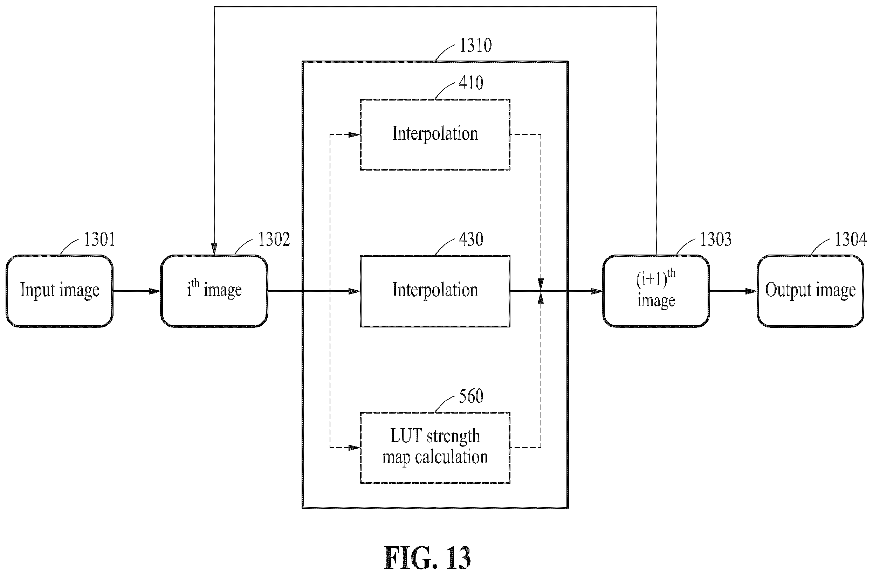

FIG. 13 illustrates an example of a method for super resolution repeatedly performed.

Referring to FIG. 13, a method for super resolution is preferably repeated a plurality of times. The method for super resolution may correspond to the method for super resolution for acquiring an output image of a target resolution corresponding to an input image described above with reference to FIGS. 1 to 12. A residual LUT-based super-resolution model 1310 may be a model for performing the operations of the method for super resolution described above with reference to FIGS. 1 to 12. Although the weighted sum process 810 is not shown in FIG. 13, the residual LUT-based super-resolution model 1310 may further include the weighted sum process 810 for acquiring a first intermediate image.

As an example, an image 1302 input into the residual LUT-based super-resolution model 1310 in a first iteration (i=1) may correspond to an input image 1301. An $(i+1)^{th}$ image 1303 output from the residual LUT-based super-resolution model 1310 in the first iteration (i=1) may be input into the residual LUT-based super-resolution model 1310 in a second iteration (i=2). For example, the $(i+1)^{th}$ image 1303 output from the residual LUT-based super-resolution model 1310 with respect to an $i^{th}$ image 1302 in an $i^{th}$ iteration may correspond to an input of the residual LUT-based super-resolution model 1310 in the $(i+1)^{th}$ iteration. When n iterations (n being a natural number greater than or equal to "1") are set, an image 1303 output from the residual LUT-based super-resolution model 1310 with respect to an $n^{th}$ input image may correspond to an output image 1304 output as a final super-resolution operation result with respect to the input image 1301.

According to an example, the number of iterations n of the method for super resolution may be determined based on an upscaling factor of the residual LUT-based super-resolution model 1310 and a target resolution. For example, when the upscaling factor of the residual LUT-based super-resolution model 1310 is $r_1 \times r_2$ and the target resolution is $r_1^k \times r_2^k$, the number of iterations may be determined to be k.

According to an example, the residual LUT-based super-resolution model 1310 may include a plurality of models having different upscaling factors. When the residual LUT-based super-resolution model 1310 includes a first model and a second model that have different upscaling factors, an input image may be input into the first model or the second model in each iteration.

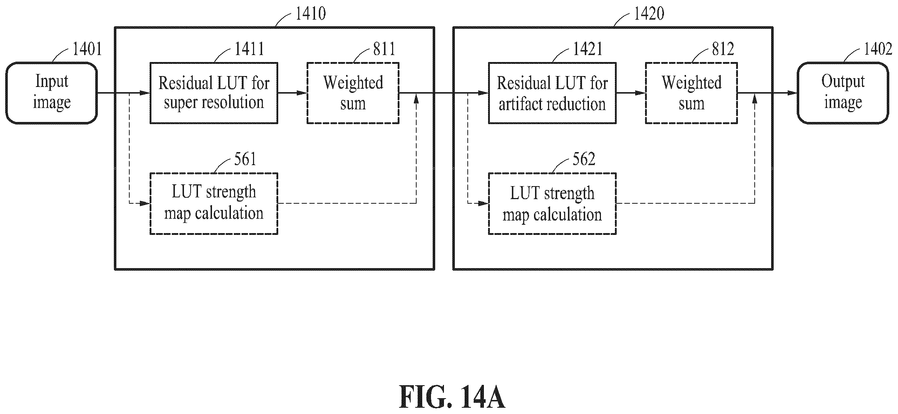

FIGS. 14A to 14C illustrate examples of methods for super resolution for controlling artifacts.

Referring to FIG. 14A, a method for super resolution for artifact control of one or more preferred embodiments may include an operation of performing super resolution based on a residual LUT-based model 1410 for super resolution, and an operation of performing artifact reduction based on a residual LUT-based model 1420 for artifact reduction.

According to an example, the operation of performing super resolution may correspond to the method for super resolution for acquiring an output image of a target resolution corresponding to an input image described above with reference to FIGS. 1 to 12. The residual LUT-based model 1410 for super resolution may be a model for performing the operations of the method for super resolution described above with reference to FIGS. 1 to 12. A residual LUT process 1411 for super resolution may correspond to the residual LUT process 430 described above.

According to an example, the operation of performing artifact reduction may include a residual LUT process 1421 for artifact reduction. Similar to the residual LUT process 430 described above, the residual LUT process 1421 for artifact reduction may include a process of obtaining an operation result of artifact reduction corresponding to each pixel in an input image from a residual LUT for artifact reduction in which operation results of artifact reduction of a pixel value combination corresponding to a kernel of the input image are stored.

The residual LUT process 1421 for artifact reduction differs from the residual LUT process 1411 for super resolution in that the residual LUT process 1421 for artifact reduction obtains values stored in a different type of residual LUT from that of the residual LUT process 1411 for super resolution as the operation results of artifact reduction. A residual LUT for artifact reduction may correspond to a data structure in which operation results of artifact reduction of a model for artifact reduction are stored. As an example, the model for artifact reduction may include a neural network trained to output an image with reduced artifacts from an input image.

Similar to the residual LUT process 430, the residual LUT process 1421 for artifact reduction may include an operation of computing the angle of the gradient of each pixel through the gradient computation process 440 and selecting a residual LUT for artifact reduction corresponding to a direction type determined based on the gradient computed in the gradient computation process 440 through the residual LUT selection process 450.

Preferably, the operation of performing super resolution comprises a LUT strength map calculation process 561.

Preferably, the operation of performing artifact reduction comprises a LUT strength map calculation process 562. The LUT strength map calculation process 561 in the operation of performing super resolution and the LUT strength map calculation process 562 in the operation of performing artifact reduction may correspond to the LUT strength map calculation process 560 described above. As an example, a tuning parameter input during the LUT strength map calculation process 561 in the operation of performing super resolution and a tuning parameter input during the LUT strength map calculation process 562 in the operation of performing artifact reduction may be the same or different from each other.

Preferably, the operation of performing super resolution comprises a weighted sum process 811. Preferably, the operation of performing artifact reduction comprises a weighted sum process 812. The weighted sum process 811 in the operation of performing super resolution and the weighted sum process 812 in the operation of performing artifact reduction may correspond to the weighted sum process 810 described above. As an example, since a residual LUT for super resolution in the operation of performing super resolution and a residual LUT for artifact reduction in the operation of performing artifact reduction are different LUTs, weights respectively corresponding to kernels determined by the weighted sum process 811 in the operation of performing super resolution and weights respectively corresponding to kernels determined by the weighted sum process 812 in the operation of performing artifact reduction may be different from each other.

According to an example, an image input into the residual LUT-based model 1420 for artifact reduction may be an image output from the residual LUT-based model 1410 for super resolution upon receiving an input image 1401.

According to an example, an image output from the residual LUT-based model 1420 for artifact reduction may correspond to a final output image 1402. As an example, a baseline image acquired by the interpolation process 410 may be added to the image output from the residual LUT-based model 1410 for super resolution or may be added to the image output from the residual LUT-based model 1420 for artifact reduction.

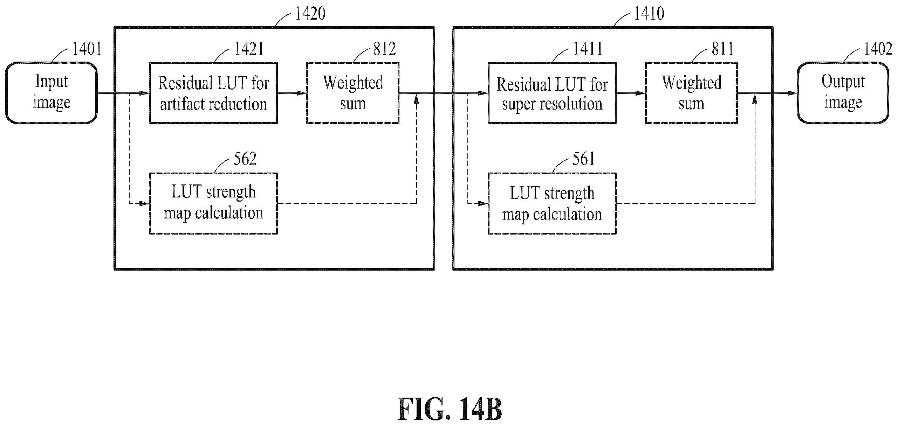

Referring to FIG. 14B, unlike the description provided with reference to FIG. 14A, to acquire the output image 1402 that is a super-resolution image for artifact control corresponding to the input image 1401, an operation of performing artifact reduction may be performed first based on the residual LUT-based model 1420 for artifact reduction, and an operation of performing super resolution may be performed based on the residual LUT-based model 1410 for super resolution.

According to an example, an image input into the residual LUT-based model 1410 for super resolution may be an image output from the residual LUT-based model 1420 for artifact reduction upon receiving the input image 1401.

According to an example, an image output from the residual LUT-based model 1410 for super resolution may correspond to the final output image 1402. As an example, a baseline image acquired by the interpolation process 410 may be added to the image output from the residual LUT-based model 1410 for super resolution or may be added to the image output from the residual LUT-based model 1420 for artifact reduction.

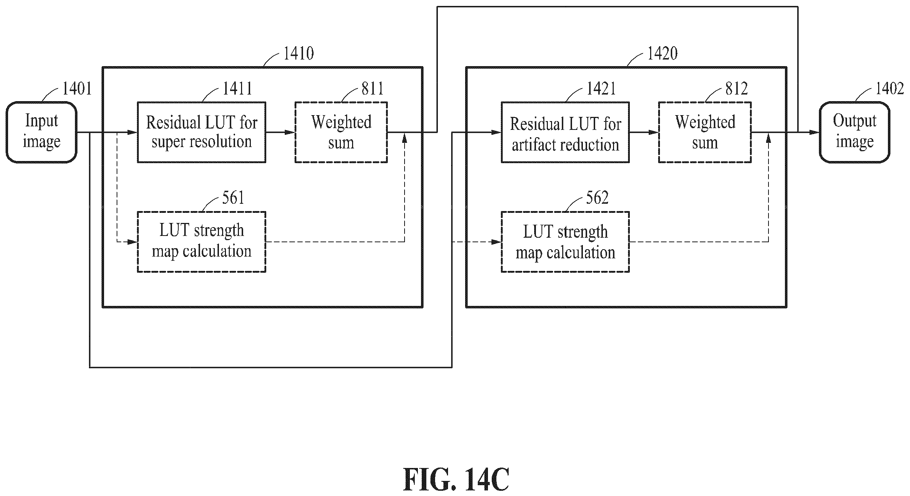

Referring to FIG. 14C, unlike the description provided with reference to FIG. 14A and 14B, to acquire the output image 1402 that is a super-resolution image for artifact control corresponding to the input image 1401, an operation of performing super resolution based on the residual LUT-based model 1410 for super resolution and an operation of performing artifact reduction based on the residual LUT-based model 1420 for artifact reduction may be performed in parallel.

According to an example, the input image 1401 may be input into the residual LUT-based model 1410 for super resolution and the residual LUT-based model 1420 for artifact reduction. The output image 1402 may be acquired based on the sum or weighted sum of the image output from the residual LUT-based model 1410 for super resolution and the image output from the residual LUT-based model 1420 for artifact reduction. As an example, the baseline image acquired by the interpolation process 410 may be added to an image acquired by adding the image output from the residual LUT-based model 1410 for super resolution and the image output from the residual LUT-based model 1420 for artifact reduction to acquire the output image 1402.

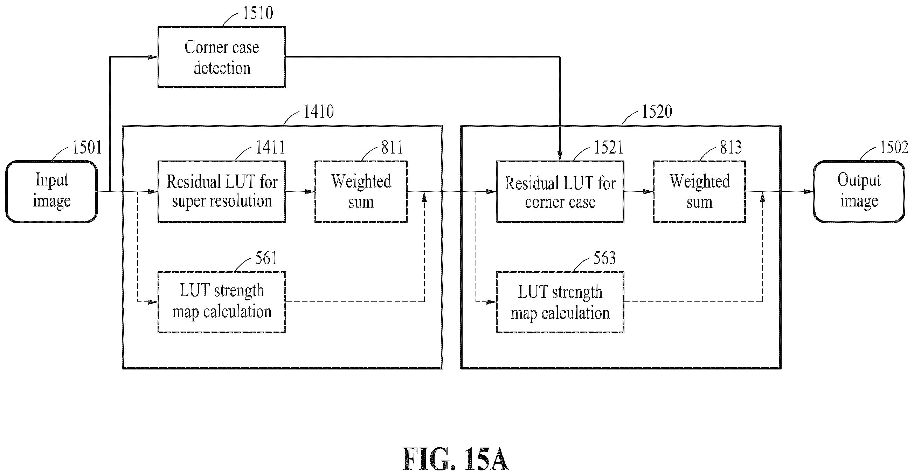

FIGS. 15A to 15C illustrate examples of methods for super resolution for corner case processing.

Referring to FIG. 15A, a corner detection process 1510 may be performed on an input image 1501. A corner may correspond to a region corresponding to an edge in an image.

A method for super resolution for corner case processing according to an example may include an operation of performing super resolution based on the residual LUT-based model 1410 for super resolution, and an operation of processing a corner case based on a residual LUT-based model 1520 for corner cases with respect to a corner region detected by the corner detection process 1510.

According to an example, the operation of processing a corner case may include a residual LUT process 1521 for corner cases. Similar to the residual LUT process 430 described above, the residual LUT process 1521 for corner cases may include a process of obtaining an operation result of corner case processing corresponding to each pixel in an input image from a residual LUT for corner case processing in which operation results of corner case processing of a pixel value combination corresponding to a kernel of the input image are stored.

The residual LUT process 1521 for corner case processing differs from the residual LUT process 1411 for super resolution in that the residual LUT process 1521 for corner case processing obtains values stored in a different type of residual LUT from that of the residual LUT process 1411 for super resolution as the operation results of corner case processing. A residual LUT for corner case processing may correspond to a data structure in which operation results of corner case processing of a model for corner case processing are stored. As an example, the model for corner case processing may include a neural network trained to output an image with a corrected corner case from an input image.

Similar to the residual LUT process 430, the residual LUT process 1521 for corner case processing may include an operation of computing the angle of the gradient of each pixel through the gradient computation process 440 and selecting a residual LUT for corner case processing corresponding to a direction type determined based on the gradient computed in the gradient computation process 440 through the residual LUT selection process 450.

According to an example, the operation of performing corner case processing may include a LUT strength map calculation process 563. The LUT strength map calculation process 563 in the operation of performing corner case processing may correspond to the LUT strength map calculation process 560 described above. As an example, a tuning parameter input during the LUT strength map calculation process 561 in the operation of performing super resolution and a tuning parameter input during the LUT strength map calculation process 563 in the operation of performing corner case processing may be the same or different from each other.

According to an example, the operation of performing corner case processing may include a weighted sum process 813. The weighted sum process 813 in the operation of performing corner case processing may correspond to the weighted sum process 810 described above. As an example, since a residual LUT for super resolution in the operation of performing super resolution and a residual LUT for corner case processing in the operation of performing corner case processing are different LUTs, weights respectively corresponding to kernels determined by the weighted sum process 811 in the operation of performing super resolution and weights respectively corresponding to kernels determined by the weighted sum process 813 in the operation of performing corner case processing may be different from each other.

According to an example, an image input into the residual LUT-based model 1520 for corner case processing may be an image output from the residual LUT-based model 1410 for super resolution upon receiving the input image 1501.

According to an example, an image output from the residual LUT-based model 1520 for corner case processing may correspond to a final output image 1502. As an example, a baseline image acquired by the interpolation process 410 may be added to the image output from the residual LUT-based model 1410 for super resolution or may be added to the image output from the residual LUT-based model 1520 for corner case processing.

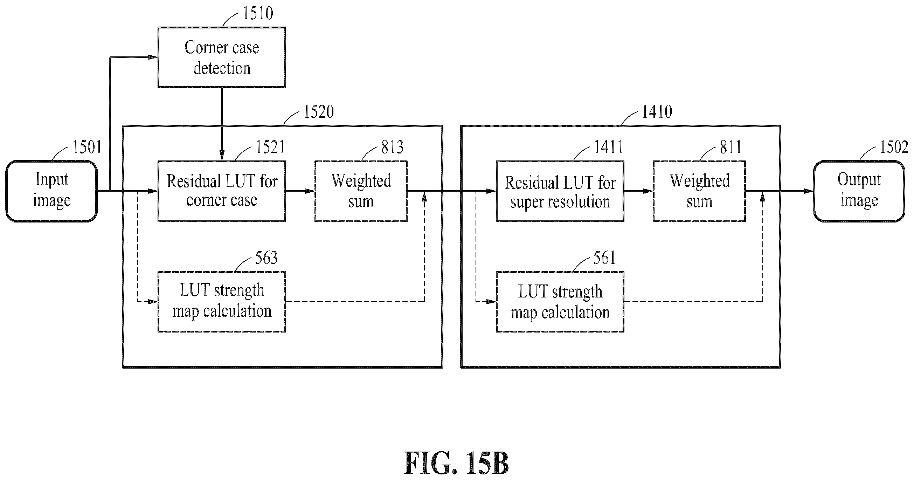

Referring to FIG. 15B, unlike the description provided with reference to FIG. 15A, to acquire the output image 1502 that is a super-resolution image for corner case processing corresponding to the input image 1501, an operation of processing a corner case may be performed first based on the residual LUT-based model 1520 for corner case processing, and an operation of performing super resolution may be performed based on the residual LUT-based model 1410 for super resolution.

According to an example, an image input into the residual LUT-based model 1410 for super resolution may be an image output from the residual LUT-based model 1520 for corner case processing upon receiving the input image 1501.

According to an example, an image output from the residual LUT-based model 1410 for super resolution may correspond to the final output image 1502. As an example, a baseline image acquired by the interpolation process 410 may be added to the image output from the residual LUT-based model 1410 for super resolution or may be added to the image output from the residual LUT-based model 1520 for corner case processing.

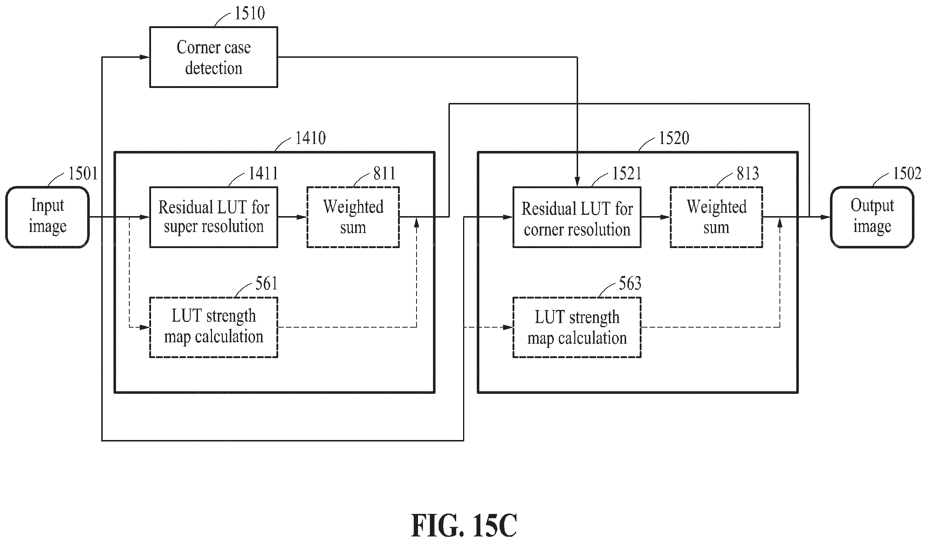

Referring to FIG. 15C, unlike the description provided with reference to FIG. 15A and 15B, to acquire the output image 1502 that is a super-resolution image for corner case processing corresponding to the input image 1501, an operation of performing super resolution based on the residual LUT-based model 1410 for super resolution and an operation of processing a corner case based on the residual LUT-based model 1520 for corner case processing may be performed in parallel.

According to an example, the input image 1501 may be input into the residual LUT-based model 1410 for super resolution and the residual LUT-based model 1520 for corner case processing. The output image 1502 may be acquired based on the sum or weighted sum of the image output from the residual LUT-based model 1410 for super resolution and the image output from the residual LUT-based model 1520 for corner case processing. As an example, the baseline image acquired by the interpolation process 410 may be added to an image acquired by adding the image output from the residual LUT-based model 1410 for super resolution and the image output from the residual LUT-based model 1520 for corner case processing to acquire the output image 1502.

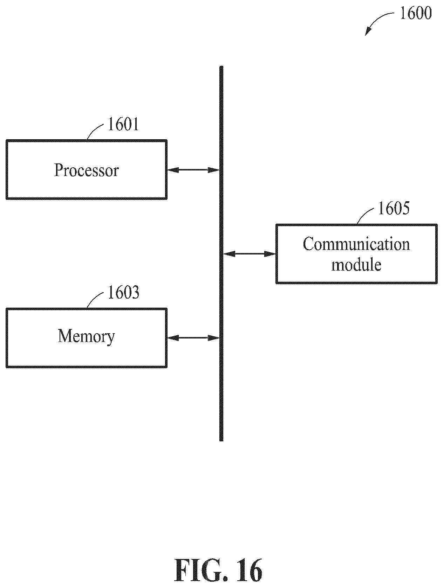

FIG. 16 illustrates an example of a configuration of an apparatus.

Referring to FIG. 16, an apparatus 1600 preferably comprises a processor 1601 (e.g., one or more processors), a memory 1603 (e.g., one or more memories), and a communication module 1605. Preferably, the apparatus 1600 is an apparatus for super-resolution image processing, and comprises an apparatus for performing the methods for super resolution described above with reference to FIGS. 1 to 15C. For example, the apparatus 1600 may include various devices for image processing, such as a smart phone, a camera, a medical imaging device, a virtual reality (VR) device, and a semiconductor image measurement device. For example, the apparatus 1600 may apply to hardware image signal processing (ISP).

The processor 1601 is preferably configured to perform at least one of the operations described above with reference to FIGS. 1 to 15C. For example, the processor 1601 may perform at least one of an operation of determining a direction type of an input image based on a gradient of the input image, an operation of acquiring a first intermediate image that is a super-resolution image corresponding to the input image based on a residual LUT corresponding to a kernel set mapped to the determined direction type, an operation of determining a LUT strength map of the input image based on the gradient of the input image and a preset tuning parameter, or an operation of acquiring an output image that is a super-resolution image of the input image based on the LUT strength map and the first intermediate image.

For example, the processor 1601 may perform an operation of determining a direction type of an input image based on a gradient of the input image, an operation of obtaining super-resolution operation results respectively corresponding to kernels included in a kernel set mapped to the determined direction type of the input image based on residual LUTs respectively corresponding to the kernels, and an operation of acquiring an output image that is a super-resolution image of the input image based on a weighted sum of super-resolution operation results respectively corresponding to the kernels by weights determined respectively for the kernels.

The memory 1603 according to an example may be a volatile or non-volatile memory, and may store data related to the methods for super resolution described above with reference to FIGS. 1 to 15C. As an example, the memory 1603 may store data generated during the process of performing the methods for super resolution or data necessary for performing the methods for super resolution. In an example, the memory 1603 may be or include a non-transitory computer-readable storage medium storing instructions that, when executed by the processor 1601, configure the processor 1601 to perform any one, any combination, or all of the operations and methods described herein with respect to FIGS. 1-16.

The communication module 1605 according to an example may provide a function for the apparatus 1600 to communicate with another electronic device or another server through a network. For example, the apparatus 1600 may be connected to an external device (e.g., a terminal of a user, a server, or a network) through the communication module 1605 and exchange data with the external device.

According to an example, the memory 1603 may not be a component of the apparatus 1600 and may be included in an external device accessible by the apparatus 1600. In this case, the apparatus 1600 may receive data stored in a memory included in the external device and transmit data to be stored in the memory through the communication module 1605.

According to an example, the memory 1603 may store a program configured to implement the methods for super resolution described above with reference to FIGS. 1 to 15C. The processor 1601 may execute the program stored in the memory 1603 and control the apparatus 1600. Code of the program executed by the processor 1601 may be stored in the memory 1603.

The apparatus 1600 according to an example may further comprise other components not shown in the drawings. For example, the apparatus 1600 may further include an input/output interface including an input device and an output device as the means for interface with the communication module 1605. In addition, for example, the apparatus 1600 may further include other components such as a transceiver, various sensors, and a database.

The apparatuses, processors, memories, communication modules, apparatus 1600, processor 1601, memory 1603, communication module 1605, and other apparatuses, devices, units, modules, and components disclosed and described herein with respect to FIGS. 1-16 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-16 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

Instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, do not amount to a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magnetooptical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims.

## Claims

1.  A processor-implemented method with super resolution comprising:

**EP 4 488 927 B1**

determining a direction type of an input image based on a gradient of the input image;
acquiring a first intermediate image that is a super-resolution image corresponding to the input image based on a residual look-up table, LUT, corresponding to a kernel set mapped to the determined direction type;
determining a LUT strength map of the input image based on the gradient of the input image and a preset tuning parameter; and
generating an output image that is a super-resolution image of the input image based on the LUT strength map and the first intermediate image;
**characterized in that**
the residual LUT comprises a super-resolution operation result of a combination of pixel values, the number of which equals the size of a corresponding kernel minus one.

2. The method according to the previous claim, wherein the acquiring of the first intermediate image comprises:

determining a receptive field corresponding to a reference pixel in the input image based on a kernel included in the kernel set;
updating values of pixels in the receptive field with values obtained by subtracting a value of the reference pixel from the values of the pixels in the receptive field; and
obtaining values stored in a residual LUT corresponding to the kernel with respect to a combination of the updated values of the pixels other than the reference pixel in the receptive field to acquire the first intermediate image.

3. The method according to claim 1 or 2, wherein the generating of the output image comprises:

acquiring a second intermediate image based on the LUT strength map and the first intermediate image; and
generating the output image based on a baseline image acquired by applying interpolation for super resolution to the input image and the second intermediate image.

4. The method according to any one of the previous claims, wherein the LUT strength map of the input image comprises a LUT strength value of each pixel in the input image, determined based on a product of a gradient of each pixel in the input image and the tuning parameter;
preferably wherein a LUT strength value of a first pixel included in the input image:

is determined to be a predetermined maximum value in response to a product of a magnitude of a gradient of the first pixel and the tuning parameter being greater than the predetermined maximum value,
is determined to be a predetermined minimum value in response to the product of the magnitude of the gradient of the first pixel and the tuning parameter being less than the predetermined minimum value, and
is determined to be the multiplication of the magnitude of the gradient of the first pixel and the tuning parameter in response to the product of the magnitude of the gradient of the first pixel and the tuning parameter being less than or equal to the maximum value and greater than or equal to the minimum value.

5. The method according to any one of the previous claims, wherein

the kernel set comprises a plurality of kernels, and
the acquiring of the first intermediate image is based on a weighted sum of super-resolution operation results respectively on weights determined for the kernels;
and/or wherein
the acquiring of the first intermediate image comprises updating the first intermediate image with an image acquired by overlapping patches corresponding to different regions of the first intermediate image,
each of the patches of the first intermediate image is a set of pixels corresponding to super-resolution results of each pixel in the input image, and
a pixel value of a region where the patches are overlapped in the updated first intermediate image is determined to be an average of pixel values of the overlapped patches.

6. The method according to any one of the previous claims, wherein

the determining of the LUT strength map of the input image comprises determining a LUT strength value corresponding to a pixel detected as a corner in the input image based on a gradient of said pixel and the tuning parameter, and
the generating of the output image is based on the LUT strength value corresponding to the pixel detected as the corner in the input image and the first intermediate image, in response to a first pixel in the first intermediate image corresponding to the pixel detected as the corner in the input image;

and/or further comprising setting the output image as the input image and repeating the determining of the direction type of the input image, the acquiring of the first intermediate image, the determining of the LUT strength map, and the generating of the output image.

7. A processor-implemented method with super resolution comprising:

determining a direction type of an input image based on a gradient of the input image;

obtaining super-resolution operation results respectively corresponding to kernels included in a kernel set mapped to the determined direction type of the input image based on residual look-up tables, LUTs, respectively corresponding to the kernels; and

generating an output image that is a super-resolution image of the input image based on a weighted sum of super-resolution operation results respectively corresponding to the kernels by weights determined respectively for the kernels;

**characterized in that**

the residual LUTs comprise super-resolution operation results of a combination of pixel values, the number of which equals the size of a corresponding kernel minus 1.

8. The method according to the previous claim, wherein the generating of the output image comprises:

acquiring a first intermediate image that is a super-resolution image corresponding to the input image based on the weighted sum of the super-resolution operation results respectively on the weights determined for the kernels; and

generating the output image based on a baseline image acquired by applying interpolation for super resolution to the input image and the first intermediate image.

9. The method according to any one of the previous claims 7-8, wherein the obtaining of the super-resolution operation results comprises:

determining a receptive field corresponding to a reference pixel in the input image based on a kernel included in the kernel set;

updating values of pixels in the receptive field with values obtained by subtracting a value of the reference pixel from the values of the pixels in the receptive field; and

obtaining values stored in a residual LUT corresponding to the kernel with respect to a combination of the updated values of the pixels other than the reference pixel in the receptive field to obtain the super-resolution operation results;

and/or wherein a first weight determined for a first kernel among the kernels is determined based on a relative positional relationship between a reference pixel and another pixel in a receptive field indicated by the first kernel.

10. The method according to any one of the previous claims 7-9, wherein

the generating of the output image comprises updating a super-resolution operation result corresponding to a first kernel among the kernels by overlapping patches corresponding to different regions of the super-resolution operation result corresponding to the first kernel,

each of the patches of the super-resolution operation result corresponding to the first kernel is a set of super-resolution results of each pixel in the input image stored in a residual LUT corresponding to the first kernel, and

a pixel value of a region where the patches are overlapped in the updated super-resolution operation result corresponding to the first kernel is determined to be an average of pixel values of the overlapped patches;

and/or wherein the generating of the output image comprises:

determining the weighted sum of the super-resolution operation results respectively corresponding to the kernels, for a first pixel detected as a corner in the input image, and

determining a simple sum of the super-resolution operation results respectively corresponding to the kernels, for a second pixel not detected as a corner in the input image.

11. The method according to any one of the previous claims 7-10, further comprising setting the output image as the input image and repeating the determining of the direction type of the input image, the obtaining of the super-resolution operation results respectively corresponding to the kernels, and the generating of the output image.

12. A non-transitory computer-readable storage medium storing instructions that, when executed by one or more processors, configure the one or more processors to perform the method according to any one of the previous claims.

13. An apparatus for super-resolution image processing comprising one or more processors configured to:

determine a direction type of an input image based on a gradient of the input image;
acquire a first intermediate image that is a super-resolution image corresponding to the input image based on a residual look-up table, LUT, corresponding to a kernel set mapped to the determined direction type;
determine a LUT strength map of the input image based on the gradient of the input image and a preset tuning parameter; and
generate an output image that is a super-resolution image of the input image based on the LUT strength map and the first intermediate image;
**characterized in that**
the residual LUT comprises a super-resolution operation result of a combination of pixel values, the number of which equals the size of a corresponding kernel minus one.

14. The apparatus according to the previous claim, wherein

the kernel set comprises a plurality of kernels, and
for the acquiring of the first intermediate image, the one or more processors are further configured to acquire the first intermediate image based on a weighted sum of super-resolution operation results respectively on weights determined for the kernels.

15. An apparatus for super-resolution image processing comprising one or more processors configured to:

determine a direction type of an input image based on a gradient of the input image;
obtain super-resolution operation results respectively corresponding to kernels included in a kernel set mapped to the determined direction type of the input image based on residual look-up tables, LUTs, respectively corresponding to the kernels; and
generate an output image that is a super-resolution image of the input image based on a weighted sum of super-resolution operation results respectively on weights determined for the kernels;
**characterized in that**
the residual LUTs comprise super-resolution operation results of a combination of pixel values, the number of which equals the size of a corresponding kernel minus 1.

**Patentansprüche**

1. Prozessorimplementiertes Verfahren mit Superauflösung, das Folgendes umfasst:

Bestimmen einer Richtungsart eines Eingangsbildes basierend auf einem Gradienten des Eingangsbildes;
Erhalten eines ersten Zwischenbildes, bei dem es sich um ein dem Eingangsbild entsprechendes Superauflösungsbild handelt, basierend auf einer Rest-Nachschlagetabelle (Rest-LUT, Look-Up Table), die einer Kerngruppe entspricht, die auf die bestimmte Richtungsart abgebildet ist;
Bestimmen einer LUT-Stärkekarte des Eingangsbildes basierend auf dem Gradienten des Eingangsbildes und einem vordefinierten Abstimmungsparameter; und
Erzeugen eines Ausgangsbildes, bei dem es sich um ein Superauflösungsbild des Eingangsbildes handelt, basierend auf der LUT-Stärkekarte und dem ersten Zwischenbild;
**dadurch gekennzeichnet, dass**
die Rest-LUT ein Superauflösungsoperationsergebnis einer Kombination von Pixelwerten umfasst, deren Anzahl der Größe eines entsprechenden Kerns minus eins entspricht.

2. Verfahren nach dem vorhergehenden Anspruch, wobei das Erhalten des ersten Zwischenbildes Folgendes umfasst:

Bestimmen eines einem Referenzpixel in dem Eingangsbild entsprechenden Empfangsfeldes basierend auf einem in der Kerngruppe eingeschlossenen Kerns;

Aktualisieren von Werten von Pixeln in dem Empfangsfeld mit Werten, die durch Subtrahieren eines Wertes des Referenzpixels von den Werten der Pixel in dem Empfangsfeld erhalten werden; und

Erhalten von in einer Rest-LUT gespeicherten Werten, die dem Kern in Bezug auf eine Kombination der aktualisierten Werte der anderen Pixel als dem Referenzpixel in dem Empfangsfeld entsprechen, um das erste Zwischenbild zu erhalten.

3. Verfahren nach Anspruch 1 oder 2, wobei das Erzeugen des Ausgangsbildes Folgendes umfasst:

Erhalten eines zweiten Zwischenbildes basierend auf der LUT-Stärkekarte und dem ersten Zwischenbild; und Erzeugen des Ausgangsbildes basierend auf einem Basisbild, das durch Anwenden von Interpolation zur Superauflösung auf das Eingangsbild und das zweite Zwischenbild erhalten wird.

4. Verfahren nach einem der vorhergehenden Ansprüche, wobei die LUT-Stärkekarte des Eingangsbildes einen LUT-Stärkewert jedes Pixels in dem Eingangsbild umfasst, der basierend auf einem Produkt aus einem Gradienten jedes Pixels in dem Eingangsbild und dem Abstimmungsparameter bestimmt wird; wobei vorzugsweise ein LUT-Stärkewert eines in dem Eingangsbild enthaltenen ersten Pixels:

als ein vorbestimmter Maximalwert bestimmt wird als Reaktion darauf, dass ein Produkt einer Größe eines Gradienten des ersten Pixels und des Abstimmungsparameters größer als der vorbestimmte Maximalwert ist, als ein vorbestimmter Minimalwert bestimmt wird als Reaktion darauf, dass das Produkt der Größe des Gradienten des ersten Pixels und des Abstimmungsparameters kleiner als der vorbestimmte Minimalwert ist, und als Multiplikation der Größe des Gradienten des ersten Pixels und des Abstimmungsparameters bestimmt wird als Reaktion darauf, dass das Produkt der Größe des Gradienten des ersten Pixels und des Abstimmungsparameters kleiner oder gleich dem Maximalwert und größer oder gleich dem Minimalwert ist.

5. Verfahren nach einem der vorhergehenden Ansprüche, wobei

die Kerngruppe eine Vielzahl von Kernen umfasst, und das Erhalten des ersten Zwischenbildes auf einer gewichteten Summe von Superauflösungsoperationsergebnissen von jeweils für die Kerne bestimmter Gewichtungen basiert; und/oder wobei das Erhalten des ersten Zwischenbildes das Aktualisieren des ersten Zwischenbildes mit einem Bild umfasst, das durch Überlappung von Patches, die verschiedenen Bereichen des ersten Zwischenbildes entsprechen, erhalten wird, es sich bei jedem der Patches des ersten Zwischenbildes um eine Gruppe von Pixeln handelt, die den Superauflösungsergebnissen jedes Pixels in dem Eingangsbild entsprechen, und ein Pixelwert eines Bereichs, in dem sich die Patches in dem aktualisierten ersten Zwischenbild überlappen, als ein Durchschnitt von Pixelwerte der überlappenden Patches bestimmt wird.

6. Verfahren nach einem der vorhergehenden Ansprüche, wobei

das Bestimmen der LUT-Stärkekarte des Eingangsbildes das Bestimmen eines LUT-Stärkewertes, der einem als Ecke erfassten Pixel in dem Eingangsbild entspricht, basierend auf einem Gradienten des Pixels und dem Abstimmungsparameter umfasst, und das Erzeugen des Ausgangsbildes auf dem LUT-Stärkewert basiert, der dem in dem Eingangsbild als Ecke erfassten Pixel und dem ersten Zwischenbild entspricht, als Reaktion darauf, dass ein erstes Pixel in dem ersten Zwischenbild dem Pixel entspricht, das als Ecke in dem Eingangsbild erfasst wurde; und/oder ferner das Festlegen des Ausgangsbildes als das Eingangsbild und das Wiederholen des Bestimmens der Richtungsart des Eingangsbildes, des Erhaltens des ersten Zwischenbildes, des Bestimmens der LUT-Stärkekarte und des Erzeugens des Ausgangsbildes umfasst.

7. Prozessorimplementiertes Verfahren mit Superauflösung, das Folgendes umfasst:

Bestimmen einer Richtungsart eines Eingangsbildes basierend auf einem Gradienten des Eingangsbildes; Erhalten von Superauflösungsoperationsergebnissen, die jeweils Kernen entsprechen, die in einer auf die bestimmte Richtungsart des Eingangsbildes abgebildeten Kerngruppe enthalten sind, basierend auf Rest-Nachschlagetabellen (Rest-LUTs), die jeweils den Kernen entsprechen; und Erzeugen eines Ausgangsbildes, bei dem es sich um ein Superauflösungsbild des Eingangsbildes handelt, basierend auf einer gewichteten Summe von Superauflösungsoperationsergebnissen, die jeweils den Kernen entsprechen, durch Gewichtungen, die jeweils für die Kerne bestimmt wurden;

**dadurch gekennzeichnet, dass**

die Rest-LUTs Superauflösungsoperationsergebnisse einer Kombination von Pixelwerten umfassen, deren Anzahl der Größe eines entsprechenden Kerns minus 1 entspricht.

8. Verfahren nach dem vorhergehenden Anspruch, wobei das Erzeugen des Ausgangsbildes Folgendes umfasst:

Erhalten eines ersten Zwischenbildes, bei dem es sich um ein dem Eingangsbild entsprechendes Superauflösungsbild handelt, basierend auf der gewichteten Summe der Superauflösungsoperationsergebnisse durch Gewichtungen, die jeweils für die Kerne bestimmt wurden; und

Erzeugen des Ausgangsbildes basierend auf einem Basisbild, das durch Anwenden von Interpolation zur Superauflösung auf das Eingangsbild und das erste Zwischenbild erhalten wird.

9. Verfahren nach einem der vorhergehenden Ansprüche 7 bis 8, wobei das Erhalten der Superauflösungsoperationsergebnisse Folgendes umfasst:

Bestimmen eines einem Referenzpixel in dem Eingangsbild entsprechenden Empfangsfeldes basierend auf einem in der Kerngruppe enthaltenen Kern;

Aktualisieren von Werten von Pixeln in dem Empfangsfeld mit Werten, die durch Subtrahieren eines Wertes des Referenzpixels von den Werten der Pixel in dem Empfangsfeld erhalten werden; und

Erhalten von in einer Rest-LUT gespeicherten Werten, die dem Kern in Bezug auf eine Kombination der aktualisierten Werte der anderen Pixel als dem Referenzpixel in dem Empfangsfeld entsprechen, um die Superauflösungsoperationsergebnisse zu erhalten;

und/oder wobei eine erste Gewichtung, die für einen ersten Kern unter den Kernen bestimmt wird, basierend auf einer relativen Positionsbeziehung zwischen einem Referenzpixel und einem anderen Pixel in einem Empfangsfeld, das durch den ersten Kern angegeben wird, bestimmt wird.

10. Verfahren nach einem der vorhergehenden Ansprüche 7 bis 9, wobei

das Erzeugen des Ausgangsbildes das Aktualisieren eines Superauflösungsoperationsergebnisses, das einem ersten Kern unter den Kernen entspricht, durch Überlappung von Patches umfasst, die verschiedenen Bereichen des Superauflösungsoperationsergebnisses entsprechen, das dem ersten Kern entspricht, es sich bei jedem der Patches des Superauflösungsoperationsergebnisses, das dem ersten Kern entspricht, um eine Gruppe von Superauflösungsergebnissen jedes Pixels in dem Eingangsbild handelt, die in einer Rest-LUT gespeichert sind, die dem ersten Kern entspricht, und

ein Pixelwert eines Bereichs, in dem die Patches in dem aktualisierten Superauflösungsoperationsergebnis, das dem ersten Kern entspricht, überlappt werden, als ein Durchschnitt von Pixelwerten der überlappten Patches bestimmt wird;

und/oder wobei das Erzeugen des Ausgangsbildes Folgendes umfasst:

Bestimmen der gewichteten Summe der Superauflösungsoperationsergebnisse, die jeweils den Kernen entsprechen, für ein erstes Pixel, das als eine Ecke im Eingangsbild erfasst wurde, und

Bestimmen einer einfachen Summe der Superauflösungsoperationsergebnisse, die jeweils den Kernen entsprechen, für ein zweites Pixel, das nicht als Ecke in dem Eingangsbild erfasst wurde.

11. Verfahren nach einem der vorhergehenden Ansprüche 7 bis 10, ferner umfassend das Festlegen des Ausgangsbildes als Eingangsbild und das Wiederholen des Bestimmens der Richtungsart des Eingangsbildes, des Erhaltens der Superauflösungsoperationsergebnisse, die jeweils den Kernen entsprechen, und des Erzeugens des Ausgangsbildes.

12. Übergangsloses computerlesbares Speichermedium, in dem Anweisungen gespeichert sind, die, wenn sie von einem oder mehreren Prozessoren ausgeführt werden, den einen oder die mehreren Prozessoren konfigurieren, um das Verfahren nach einem der vorhergehenden Ansprüche durchzuführen.

13. Vorrichtung zur Verarbeitung von Superauflösungsbildern, die einen oder mehrere Prozessoren umfasst, die zu Folgendem konfiguriert sind:

Bestimmen einer Richtungsart eines Eingangsbildes basierend auf einem Gradienten des Eingangsbildes;

Erhalten eines ersten Zwischenbildes, bei dem es sich um ein dem Eingangsbild entsprechendes Superauflösungsbild handelt, basierend auf einer Rest-Nachschlagetabelle (Rest-LUT, Look-Up Table), die einer Kerngruppe entspricht, die auf die bestimmte Art abgebildet ist;

Bestimmen einer LUT-Stärkekarte des Eingangsbildes basierend auf dem Gradienten des Eingangsbildes und einem vordefinierten Abstimmungsparameter; und

Erzeugen eines Ausgangsbildes, bei dem es sich um ein Superauflösungsbild des Eingangsbildes handelt, basierend auf der LUT-Stärkekarte und dem ersten Zwischenbild;

**dadurch gekennzeichnet, dass**

die Rest-LUT ein Superauflösungsoperationsergebnis einer Kombination von Pixelwerten umfasst, deren Anzahl von der Größe eines entsprechenden Kerns minus eins entspricht.

14. Vorrichtung nach einem der vorhergehenden Ansprüche, wobei

die Kerngruppe eine Vielzahl von Kernen umfasst, und

für das Erhalten des ersten Zwischenbildes der eine oder die mehreren Prozessoren ferner konfiguriert sind, um das erste Zwischenbild basierend auf einer gewichteten Summe der Superauflösungsoperationen bzw. auf für die Kerne bestimmten Gewichten zu erhalten.

15. Vorrichtung zur Verarbeitung von Superauflösungsbildern, die einen oder mehrere Prozessoren umfasst, die zu Folgendem konfiguriert sind:

Bestimmen einer Richtungsart eines Eingangsbildes basierend auf einem Gradienten des Eingangsbildes;

Erhalten von Superauflösungsoperationsergebnissen, die jeweils Kernen entsprechen, die in einer auf die bestimmte Richtungsart des Eingangsbildes abgebildeten Kerngruppe enthalten sind, basierend auf Rest-Nachschlagetabellen (LUTs), die jeweils den Kernen entsprechen; und

Erzeugen eines Ausgangsbildes, bei dem es sich um ein Superauflösungsbild des Eingangsbildes handelt, basierend auf einer gewichteten Summe von Superauflösungsoperationsergebnissen, an Gewichtungen, die jeweils für die Kerne bestimmt sind;

**dadurch gekennzeichnet, dass**

die Rest-LUTs Superauflösungsoperationsergebnisse einer Kombination von Pixelwerten umfassen, deren Anzahl der Größe eines entsprechenden Kerns minus 1 entspricht.

**Revendications**

1. Procédé avec super-résolution mis en œuvre par processeur, comprenant les opérations consistant à :

déterminer le type de direction d'une image d'entrée compte tenu d'un gradient de l'image d'entrée ;

acquérir une première image intermédiaire consistant en une image à super-résolution correspondant à l'image d'entrée compte tenu d'une table de correspondance (LUT, look-up table) résiduelle correspondant à un ensemble de noyaux mappés sur le type de direction déterminé ;

déterminer une mappe d'intensité LUT de l'image d'entrée compte tenu du gradient de l'image d'entrée et d'un paramètre de réglage prédéfini ; et

générer une image de sortie consistant en une image à super-résolution de l'image d'entrée à partir de la mappe d'intensité LUT et de la première image intermédiaire ;

**caractérisé en ce que**

la LUT résiduelle comprend le résultat d'une opération de super-résolution d'une combinaison de valeurs de pixel dont le nombre est égal à la taille d'un noyau correspondant moins un.

2. Procédé selon la revendication précédente, dans lequel l'acquisition de la première image intermédiaire comprend :

la détermination d'un champ réceptif correspondant à un pixel de référence dans l'image d'entrée compte tenu d'un noyau présent dans l'ensemble de noyaux ;

l'actualisation des valeurs des pixels du champ réceptif avec des valeurs obtenues en soustrayant la valeur du pixel de référence des valeurs des pixels du champ réceptif ; et

l'obtention de valeurs stockées dans une LUT résiduelle correspondant au noyau par rapport à une combinaison des valeurs actualisées des pixels, autres que le pixel de référence, du champ réceptif pour acquérir la première image intermédiaire.

**3.** Procédé selon la revendication 1 ou 2, dans lequel la génération de l'image de sortie comprend :

l'acquisition d'une deuxième image intermédiaire compte tenu de la mappe d'intensité LUT et de la première image intermédiaire ; et
la génération de l'image de sortie à partir d'une image de base de référence acquise par application d'une interpolation pour super-résolution à l'image d'entrée et de la première image intermédiaire.

**4.** Procédé selon l'une quelconque des revendications précédentes, dans lequel la mappe d'intensité LUT de l'image d'entrée comprend une valeur d'intensité LUT de chaque pixel de l'image d'entrée, déterminée compte tenu d'un produit d'un gradient de chaque pixel de l'image d'entrée et du paramètre de réglage ;
étant entendu de préférence qu'une valeur d'intensité LUT d'un premier pixel présent dans l'image d'entrée :

est déterminée comme étant une valeur maximale prédéterminée en réaction au fait qu'un produit de la grandeur d'un gradient du premier pixel et du paramètre de réglage est supérieur à la valeur maximale prédéterminée,
est déterminée comme étant une valeur minimale prédéterminée en réaction au fait que le produit de la grandeur du gradient du premier pixel et du paramètre de réglage est inférieur à la valeur minimale prédéterminée, et
est déterminée comme étant la multiplication de la grandeur du gradient du premier pixel et du paramètre de réglage, en réaction au fait que le produit de la grandeur du gradient du premier pixel et du paramètre de réglage est inférieur ou égal à la valeur maximale et supérieur ou égal à la valeur minimale.

**5.** Procédé selon l'une quelconque des revendications précédentes, dans lequel

l'ensemble de noyaux comprend une pluralité de noyaux, et
l'acquisition de la première image intermédiaire s'effectue compte tenu d'une somme pondérée de résultats d'opérations de super-résolution respectivement sur des poids déterminés pour les noyaux ; et/ou dans lequel l'acquisition de la première image intermédiaire comprend l'actualisation de la première image intermédiaire avec une image acquise par superposition de zones correspondant à différentes régions de la première image intermédiaire,
chacune des zones de la première image intermédiaire est un ensemble de pixels correspondant aux résultats de super-résolution de chaque pixel de l'image d'entrée, et
la valeur de pixel d'une région où les zones sont superposées dans la première image intermédiaire actualisée est déterminée comme étant la moyenne des valeurs de pixel des zones superposées.

**6.** Procédé selon l'une quelconque des revendications précédentes, dans lequel

la détermination de la mappe d'intensité LUT de l'image d'entrée comprend la détermination d'une valeur d'intensité LUT correspondant à un pixel détecté comme étant un coin dans l'image d'entrée, compte tenu d'un gradient dudit pixel et du paramètre de réglage, et
la génération de l'image de sortie s'effectue compte tenu de la valeur d'intensité LUT correspondant au pixel détecté comme étant un coin dans l'image d'entrée et de la première image intermédiaire, en réaction au fait qu'un premier pixel de la première image intermédiaire correspond au pixel détecté comme étant un coin dans l'image d'entrée ;
et/ou comprenant en outre la définition de l'image de sortie comme image d'entrée et la répétition de la détermination du type de direction de l'image d'entrée, l'acquisition de la première image intermédiaire, la détermination de la mappe d'intensité LUT et la génération de l'image de sortie.

**7.** Procédé avec super-résolution mis en œuvre par processeur, comprenant les étapes consistant à :

déterminer le type de direction d'une image d'entrée compte tenu d'un gradient de l'image d'entrée ;
obtenir des résultats d'opérations de super-résolution correspondant respectivement aux noyaux présents dans un ensemble de noyaux mappés sur le type de direction déterminé de l'image d'entrée compte tenu de tables de correspondance (LUT, look-up tables) résiduelles correspondant respectivement aux noyaux ; et
générer une image de sortie consistant en une image à super-résolution de l'image d'entrée compte tenu d'une somme pondérée de résultats d'opérations de super-résolution correspondant respectivement aux noyaux par des poids déterminés respectivement pour les noyaux ;
**caractérisé en ce que**
les LUT résiduelles comprennent les résultats d'opérations de super-résolution d'une combinaison de valeurs de pixel dont le nombre est égal à la taille d'un noyau correspondant moins 1.

8.  Procédé selon la revendication précédente, dans lequel la génération de l'image de sortie comprend :

    l'acquisition d'une première image intermédiaire consistant en une image à super-résolution correspondant à l'image d'entrée, compte tenu de la somme pondérée des résultats d'opérations de super-résolution respectivement sur les poids déterminés pour les noyaux ; et
    la génération de l'image de sortie à partir d'une image de base de référence acquise par application d'une interpolation pour super-résolution à l'image d'entrée et de la première image intermédiaire.

9.  Procédé selon l'une quelconque des revendications 7 et 8 précédentes, dans lequel l'obtention des résultats d'opérations de super-résolution comprend :

    la détermination d'un champ réceptif correspondant à un pixel de référence dans l'image d'entrée compte tenu d'un noyau présent dans l'ensemble de noyaux ;
    l'actualisation des valeurs des pixels du champ réceptif avec des valeurs obtenues en soustrayant la valeur du pixel de référence des valeurs des pixels du champ réceptif ; et
    l'obtention de valeurs stockées dans une LUT résiduelle correspondant au noyau par rapport à une combinaison des valeurs actualisées des pixels, autres que le pixel de référence, du champ réceptif pour obtenir les résultats d'opérations de super-résolution ;
    et/ou dans lequel un premier poids déterminé pour un premier noyau parmi les noyaux est déterminé compte tenu d'une relation de position relative entre un pixel de référence et un autre pixel d'un champ réceptif indiqué par le premier noyau.

10. Procédé selon l'une quelconque des revendications 7 à 9 précédentes, dans lequel

    la génération de l'image de sortie comprend l'actualisation d'un résultat d'opération de super-résolution correspondant à un premier noyau parmi les noyaux par superposition de zones correspondant à différentes régions du résultat de l'opération de super-résolution correspondant au premier noyau,
    chacune des zones du résultat de l'opération de super-résolution correspondant au premier noyau est un ensemble de résultats de super-résolution de chaque pixel de l'image d'entrée stockés dans une LUT résiduelle correspondant au premier noyau, et
    la valeur de pixel d'une région où les zones sont superposées dans le résultat de l'opération de super-résolution actualisé correspondant au premier noyau est déterminée comme étant la moyenne des valeurs de pixel des zones superposés ;
    et/ou dans lequel la génération de l'image de sortie comprend :

        la détermination de la somme pondérée des résultats d'opérations de super-résolution correspondant respectivement aux noyaux, pour un premier pixel détecté comme étant un coin dans l'image d'entrée, et
        la détermination d'une simple somme des résultats d'opérations de super-résolution correspondant respectivement aux noyaux, pour un deuxième pixel non détecté comme étant un coin dans l'image d'entrée.

11. Procédé selon l'une quelconque des revendications 7 à 10 précédentes, comprenant en outre la définition de l'image de sortie comme image d'entrée et la répétition de la détermination du type de direction de l'image d'entrée, l'obtention des résultats d'opérations de super-résolution correspondant respectivement aux noyaux et la génération de l'image de sortie.

12. Support de stockage non transitoire lisible par ordinateur sur lequel sont stockées des instructions qui, lorsqu'elles sont exécutées par un ou plusieurs processeurs, configurent le ou les processeurs de façon qu'ils réalisent le procédé selon l'une quelconque des revendications précédentes.

13. Dispositif de traitement d'images à super-résolution comprenant un ou plusieurs processeurs configurés pour :

    déterminer le type de direction d'une image d'entrée compte tenu d'un gradient de l'image d'entrée ;
    acquérir une première image intermédiaire consistant en une image à super-résolution correspondant à l'image d'entrée compte tenu d'une table de correspondance (LUT, look-up table) résiduelle correspondant à un ensemble de noyaux mappés sur le type de direction déterminé ;
    déterminer une mappe d'intensité LUT de l'image d'entrée compte tenu du gradient de l'image d'entrée et d'un paramètre de réglage prédéfini ; et
    générer une image de sortie consistant en une image à super-résolution de l'image d'entrée à partir de la mappe d'intensité LUT et la première image intermédiaire ;
**caractérisé en ce que**
la LUT résiduelle comprend le résultat d'une opération de super-résolution d'une combinaison de valeurs de pixel dont le nombre est égal à la taille d'un noyau correspondant moins un.

14. Dispositif selon la revendication précédente, dans lequel

l'ensemble de noyaux comprend une pluralité de noyaux, et
pour l'acquisition de la première image intermédiaire, le ou les processeurs sont configurés en outre pour acquérir la première image intermédiaire compte tenu d'une somme pondérée des résultats d'opérations de super-résolution respectivement sur des poids déterminés pour les noyaux.

15. Dispositif de traitement d'images à super-résolution comprenant un ou plusieurs processeurs configurés pour :

déterminer le type de direction d'une image d'entrée compte tenu d'un gradient de l'image d'entrée ;
obtenir des résultats d'opérations de super-résolution correspondant respectivement aux noyaux présents dans un ensemble de noyaux mappés sur le type de direction déterminé de l'image d'entrée compte tenu de tables de correspondance (LUT, look-up tables) résiduelles correspondant respectivement aux noyaux ; et
générer une image de sortie consistant en une image à super-résolution de l'image d'entrée compte tenu d'une somme pondérée de résultats d'opérations de super-résolution respectivement sur les poids déterminés pour les noyaux ;
**caractérisé en ce que**
les LUT résiduelles comprennent les résultats d'opérations de super-résolution d'une combinaison de valeurs de pixel dont le nombre est égal à la taille d'un noyau correspondant moins 1.

Start

Determine direction type of input image based on
gradient of input image

— 110

Generate first intermediate image that is super-resolution
image corresponding to input image based on residual LUT
corresponding to kernel set mapped to determined direction type

— 120

Determine LUT strength map of input image based on
gradient of input image and preset tuning parameter

— 130

Generate output image that is super-resolution image of
input image based on LUT strength map and first intermediate image

— 140

End

# FIG. 1

**FIG. 2**

FIG. 3

FIG. 4

**FIG. 5**

Start

Determine direction type of input image based on
gradient of input image
610

Obtain super-resolution operation results respectively corresponding to
kernels included in kernel set mapped to determined direction type of
input image based on residual LUTs respectively corresponding to kernels
620

Generate output image that is super-resolution image of input image
based on weighted sum of first intermediate images respectively
corresponding to kernels by weights determined respectively for kernels
630

End

**FIG. 6**

EP 4 488 927 B1

710

Back slash

711 712 713 714

E2 E1 G2 G1

720

Out1-4

Weighted Sum

Output

730

Gradient Kernel

H1 731 H2 732 V1 733 V2 734

-1 | 1    -1 | 1    -1 / 1    -1 / 1

735

Diagonal Weights 736

$$w_{Up\text{-}Left} = \frac{|H2| + |V2|}{2} \qquad w_{Up\text{-}Right} = \frac{|H1| + |V2|}{2} \qquad w_{Down\text{-}Left} = \frac{|H2| + |V1|}{2} \qquad w_{Down\text{-}Right} = \frac{|H1| + |V1|}{2}$$

$$w_{G1} = f(w_{Down\text{-}Right}) \qquad w_{G2} = f(w_{Up\text{-}Left}) \qquad w_{E1} = f(w_{Down\text{-}Left}) \qquad w_{E2} = f(w_{Up\text{-}Right})$$

$$\text{Weighted Sum} = G1 * w_{G1} + G2 * w_{G2} + E1 * w_{E1} + E2 * w_{E2}) / ((w_{G1} + w_{G2} + w_{E1} + w_{E2})/4)$$

**FIG. 7**

FIG. 8

**FIG. 9**

**FIG. 10**

FIG. 11

**FIG. 12**

**FIG. 13**

EP 4 488 927 B1

```
                                    1410                                              1420
        1401              1411              811              1421             812              1402

    ┌─────────┐    ┌──────────────┐   ┌──────────┐    ┌──────────────┐   ┌──────────┐    ┌─────────┐
    │  Input  │    │ Residual LUT │   │ Weighted │    │ Residual LUT │   │ Weighted │    │ Output  │
    │  image  │───▶│  for super   │──▶│   sum    │───▶│ for artifact │──▶│   sum    │───▶│  image  │
    │         │    │  resolution  │   │          │    │  reduction   │   │          │    │         │
    └─────────┘    └──────────────┘   └──────────┘    └──────────────┘   └──────────┘    └─────────┘

                            561                              562
                   ┌──────────────┐                  ┌──────────────┐
                   │ LUT strength │                  │ LUT strength │
                   │     map      │                  │     map      │
                   │ calculation  │                  │ calculation  │
                   └──────────────┘                  └──────────────┘
```

**FIG. 14A**

**FIG. 14B**

FIG. 14C

EP 4 488 927 B1

**FIG. 15A**

EP 4 488 927 B1

**FIG. 15B**

**FIG. 15C**

1600

1601

Processor

1605

Communication
module

1603

Memory

# FIG. 16

**EP 4 488 927 B1**

**Patent documents cited in the description**

- EP 3341911 B1

- EP 20200219 B1